# EUROPEAN PATENT SPECIFICATION

(11) **EP 3 731 453 B1**
(45) Date of publication and mention of the grant of the patent: **02.08.2023**
(21) Application number: 19750864.1
(22) Date of filing: 22.01.2019
(51) Int. Cl.: G06F 21/60, H04L 9/14, G06Q 20/34, G06Q 20/38, H04L 9/08, H04L 9/32

(54) **INFORMATION PROCESSING DEVICE, INFORMATION PROCESSING METHOD, PROGRAM, AND INFORMATION PROCESSING SYSTEM**
INFORMATIONSVERARBEITUNGSVORRICHTUNG, INFORMATIONSVERARBEITUNGSVERFAHREN, PROGRAMM UND INFORMATIONSVERARBEITUNGSSYSTEM
DISPOSITIF DE TRAITEMENT D'INFORMATIONS, PROCÉDÉ DE TRAITEMENT D'INFORMATIONS, PROGRAMME, ET SYSTÈME DE TRAITEMENT D'INFORMATIONS

(30) Priority: 06.02.2018 JP 2018018907
(43) Date of publication of application: 28.10.2020
(73) Proprietor: Sony Group Corporation, Tokyo 108-0075 (JP)
(72) Inventor: NAKATSURU, Tsutomu, Tokyo 108-0075 (JP); SHIMOJI, Katsuya, Tokyo 108-0075 (JP); TAKEMURA, Toshiharu, Tokyo 108-0075 (JP); WANG, Yuhu, Tokyo 108-0075 (JP)
(74) Representative: D Young & Co LLP
(86) International application number: PCT/JP2019/001760
(87) International publication number: WO 2019/155861

(56) References cited:
- JP-A- H04 239 352
- JP-A- H07 219 852
- JP-A- 2007 110 175
- JP-A- 2012 248 954
- JP-A- 2013 197 642
- US-A1- 2006 273 175
- Rich Mogull ET AL: "Understanding and Selecting a Tokenization Solution Understanding and Selecting a Tokenization Solution", Securosis, L.L.C, 1 January 2010 (2010-01-01), pages 1-33, XP055231499, Retrieved from the Internet: URL:https://securosis.com/assets/library/r eports/Securosis_Understanding_Tokenizatio n_V.1_.0_.pdf [retrieved on 2015-11-26]

## Description

### TECHNICAL FIELD

The present disclosure relates to an information processing apparatus, an information processing method, a program, and an information processing system.

### BACKGROUND ART

Technologies for efficiently controlling devices connected via a network have been developed. As the technology, for example, the technology disclosed in Patent Document 1 is exemplified.

### CITATION LIST

### PATENT DOCUMENT

Patent Document 1: Japanese Patent Application Laid-Open No. 2004-186883
US 2006/273175 A1 relates to a data transmission-reception system, a contactless integrated circuit (IC) chip, a mobile terminal, and information processing method, and a program, which are capable of safely and easily transferring data stored in predetermined area in a data source to a data destination.
Non-patent document "Understanding and Selecting a Tokenization Solution" (Rich Mogull et al) relates to tokenization, explaining how the technology works, exploring different use cases and scenarios, and reviewing selection criteria for picking the right option.

### SUMMARY OF THE INVENTION

### PROBLEMS TO BE SOLVED BY THE INVENTION

For example, when another device reads data that needs authority to read and is stored in a single device, authentication is performed between the single device and the other device, and the data is read after the authentication is completed.

Here, for example, in a case where the technology disclosed in Patent Document 1 is used, a plurality of commands is collectively transmitted in a single time of communication. Therefore, in a case where the technology disclosed in Patent Document 1 is used, it is possible to reduce the number of times of communication between the devices connected via the network. However, for example, the technology disclosed in Patent Document 1 simply transmits the plurality of commands collectively in a single time of communication. Therefore, for example, even if the technology disclosed in Patent Document 1 is used, it is not possible to omit "authentication for reading data that needs authority to read" from the viewpoint of security or the like, and it is difficult to reduce a processing time for reading.

In the present disclosure, an information processing apparatus, an information processing method, a program, and an information processing system that can reduce a processing time for reading and are novel and improved while ensuring security regarding data reading.

### SOLUTIONS TO PROBLEMS

The invention is defined by the appended claims.

### EFFECTS OF THE INVENTION

According to the present disclosure, a processing time for reading can be reduced while ensuring security regarding data reading.

Note that the above effects are not necessarily limited, and any effect that has been described in the present specification or other effect which may be found from the present specification may be obtained together with or instead of the above effects.

### BRIEF DESCRIPTION OF DRAWINGS

Fig. 1 is an explanatory diagram illustrating an exemplary configuration of an information processing system according to the present embodiment.
Fig. 2 is a functional block diagram illustrating an exemplary configuration of an information processing apparatus (first information processing apparatus) according to the present embodiment.
Fig. 3 is an explanatory diagram illustrating an exemplary hardware configuration of the information processing apparatus (first information processing apparatus) according to the present embodiment.
Fig. 4 is an explanatory diagram illustrating an example of configurations of an IC chip and an antenna illustrated in Fig. 3.
Fig. 5 is a functional block diagram illustrating an exemplary configuration of a reader/writer (relay device) according to the present embodiment.
Fig. 6 is an explanatory diagram illustrating an exemplary hardware configuration of the reader/writer (relay device) according to the present embodiment.
Fig. 7 is a functional block diagram illustrating an exemplary configuration of a server (second information processing apparatus) according to the present embodiment.
Fig. 8 is an explanatory diagram illustrating an exemplary hardware configuration of the server (second information processing apparatus) according to the present embodiment.
Fig. 9 is an explanatory diagram illustrating an example of communication regarding data reading using authentication using an existing challenge and response method.
Fig. 10 is an explanatory diagram illustrating an outline of setting defined by setting information according to the present embodiment.
Fig. 11 is an explanatory diagram illustrating an example of processing of an information processing system according to a first embodiment.
Fig. 12 is an explanatory diagram illustrating an example of processing of a reader/writer (relay device) included in the information processing system according to the first embodiment.
Fig. 13 is an explanatory diagram for explaining an example of processing of the information processing system according to the first embodiment.
Fig. 14 is an explanatory diagram for explaining an example of a reading request according to the present embodiment.
Fig. 15 is a flowchart illustrating an example of processing of an information processing apparatus according to the first embodiment.
Fig. 16 is an explanatory diagram illustrating an example of a case that may occur in a case where it is not possible for a server to specify when a reading request corresponding to data is transmitted.
Fig. 17 is an explanatory diagram for explaining an example of processing according to an information processing method by an information processing apparatus according to a second embodiment.
Fig. 18 is an explanatory diagram for explaining an example of the processing according to the information processing method by the information processing apparatus according to the second embodiment.
Fig. 19 is an explanatory diagram illustrating an example of processing of an information processing system according to the second embodiment.
Fig. 20 is an explanatory diagram for explaining an example of the processing of the information processing system according to the second embodiment.
Fig. 21 is an explanatory diagram illustrating an example of a case where communication from a reader/writer to an information processing apparatus is falsified.
Fig. 22 is an explanatory diagram for explaining an example of processing according to an information processing method by an information processing apparatus according to a third embodiment.
Fig. 23 is an explanatory diagram illustrating an example of processing of an information processing system according to the third embodiment.
Fig. 24 is an explanatory diagram illustrating an example of a case where encrypted data transmitted from the information processing apparatus to the reader/writer is observed by a third party.
Fig. 25 is an explanatory diagram for explaining an example of processing according to an information processing method by an information processing apparatus according to a fourth embodiment.
Fig. 26 is an explanatory diagram illustrating an example of processing of an information processing system according to the fourth embodiment.
Fig. 27 is an explanatory diagram illustrating an example of a case where data transmitted from the information processing apparatus to the reader/writer is observed by the third party and it is determined that an error occurs.
Fig. 28 is an explanatory diagram for explaining an example of processing according to an information processing method by an information processing apparatus according to a fifth embodiment.
Fig. 29 is an explanatory diagram illustrating an example of a case where identification information stored in the information processing apparatus is used by a plurality of business operators.
Fig. 30 is an explanatory diagram illustrating an example of a use case to which an information processing system according to a sixth embodiment is applied.
Fig. 31 is an explanatory diagram for explaining an example of processing according to an information processing method by an information processing apparatus according to the sixth embodiment. The sixth embodiment is an example not according to the invention and not within the scope of the appened claims, and is present for illustrative purposes only.
Fig. 32 is an explanatory diagram illustrating an example of processing of the information processing system according to the sixth embodiment.

### MODE FOR CARRYING OUT THE INVENTION

Hereinafter, preferred embodiments of the present disclosure will be described in detail with reference to the accompanying drawings. Note that, in the present specification and the drawings, components substantially having the same functional configuration are denoted with the same reference numeral so as to omit redundant description.

Furthermore, hereinafter, description will be made in the following order.
1. Information Processing System According to Present Embodiment and Information Processing Method According to Present Embodiment
   [1] Configuration of Information Processing System According to Present Embodiment
      [1-1] Information Processing Apparatus 100 (First Information Processing Apparatus)
      [1-2] Reader/writer 200 (Relay Device)
      [1-3] Server 300 (Second Information Processing Apparatus)
      [1-4] Application Example of Each Device Included in Information Processing System According to Present Embodiment
   [2] Processing According to Information Processing Method According to Present Embodiment
      [2-1] Information Processing Method According to First Embodiment
      [2-2] Information Processing Method According to Second Embodiment
      [2-3] Information Processing Method According to Third Embodiment
      [2-4] Information Processing Method According to Fourth Embodiment
      [2-5] Information Processing Method According to Fifth Embodiment
      [2-6] Information Processing Method According to Sixth Embodiment
      [2-7] Information Processing Method According to Other Embodiment
2. Program According to Present Embodiment

### (Information Processing System According to Present Embodiment and Information Processing Method According to Present Embodiment)

Hereinafter, an example of an information processing system according to the present embodiment will be described first. Thereafter, an information processing method according to the present embodiment will be described using a case of application to the information processing system according to the present embodiment as an example.

### [1] Configuration of Information Processing System According to Present Embodiment

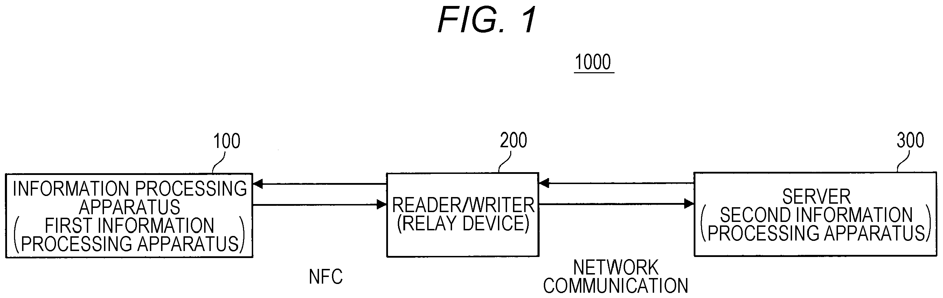

Fig. 1 is an explanatory diagram illustrating an exemplary configuration of an information processing system 1000 according to the present embodiment. The information processing system 1000 includes, for example, an information processing apparatus 100 (first information processing apparatus), a reader/writer 200 (relay device), and a server 300 (second information processing apparatus).

Note that a configuration of the information processing system according to the present embodiment is not limited to the example illustrated in Fig. 1. For example, the information processing system according to the present embodiment may include the plurality of information processing apparatuses 100. Furthermore, the information processing system according to the present embodiment may include the plurality of reader/writers 200 and may include the plurality of servers 300.

The information processing apparatus 100 and the reader/writer 200 communicate with each other by using Near Field Communication (NFC) of, for example, Type-A, Type-B, Type-F, or the like.

Note that, in the information processing system according to the present embodiment, the information processing apparatus 100 and the reader/writer 200 may communicate with each other, for example, through "wireless communication using an arbitrary communication method, such as wireless communication using IEEE802.15.1 such as Bluetooth Low Energy (BLE), wireless communication using IEEE802.11, infrared communication, or the like" or "wired communication using communication or the like via a Universal Serial Bus (USB) and a communication interface based on the ISO7816 standard".

The server 300 and the reader/writer 200 are, for example, wirelessly or wiredly connected to each other via a network and communicate with each other through communication via the network (hereinafter, indicated as "network communication"). As the network according to the present embodiment, for example, a wired network such as Local Area Network (LAN) or Wide Area Network (WAN), a wireless network such as Wireless Local Area Network (WLAN), or the Internet using a communication protocol such as Transmission Control Protocol/Internet Protocol (TCP/IP), or the like are exemplified.

Note that, in the information processing system according to the present embodiment, the server 300 and the reader/writer 200 can directly communicate with each other without communicating via the network.

The server 300 and the information processing apparatus 100 communicate with each other via the reader/writer 200. That is, in the information processing system 1000, the reader/writer 200 serves as a relay device that relays communication between the server 300 and the information processing apparatus 100.

Note that, in the information processing system according to the present embodiment, the server 300 and the information processing apparatus 100 can directly communicate with each other without using the reader/writer 200. In a case where the information processing system according to the present embodiment has a "configuration in which the server 300 and the information processing apparatus 100 directly communicate with each other without using the reader/writer 200", for example, the server 300 may have a configuration having a function of the reader/writer 200. That is, it is not necessary for the information processing system according to the present embodiment to include a device that serves as a relay device such as the reader/writer 200.

Hereinafter, as illustrated in Fig. 1, "a case where the information processing apparatus 100 and the reader/writer 200 communicate with each other by the NFC and the server 300 and the reader/writer 200 communicate with each other through network communication" will be described as an example. Note that, as described above, an example of the communication of the information processing system according to the present embodiment is not limited to the example illustrated in Fig. 1.

### [1-1] Information Processing Apparatus 100 (First Information Processing Apparatus)

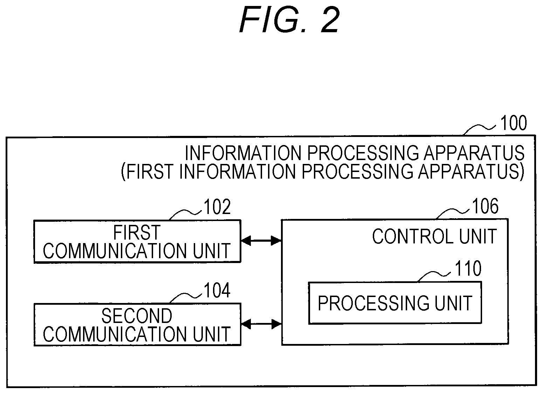

Fig. 2 is a functional block diagram illustrating an exemplary configuration of the information processing apparatus 100 (first information processing apparatus) according to the present embodiment.

The information processing apparatus 100 includes, for example, a first communication unit 102, a second communication unit 104, and a control unit 106.

Furthermore, the information processing apparatus 100 may include, for example, a Read Only Memory (ROM, not illustrated), a Random Access Memory (RAM, not illustrated), an operation unit (not illustrated) that can be operated by a user of the information processing apparatus 100, a display unit (not illustrated) that displays various screens on a display screen, or the like. The information processing apparatus 100 connects between the components, for example, by a bus as a data transmission path.

The ROM (not illustrated) stores control data such as a program to be used by the control unit 106 and an operation parameter. The RAM (not illustrated) temporarily stores a program to be executed by the control unit 106, or the like.

As the operation unit (not illustrated), an operation input device indicated in an exemplary hardware configuration of the information processing apparatus 100 to be described later is exemplified. Furthermore, as the display unit (not illustrated), a display device indicated in the exemplary hardware configuration of the information processing apparatus 100 to be described later is exemplified.

### [Exemplary Hardware Configuration of Information Processing Apparatus 100]

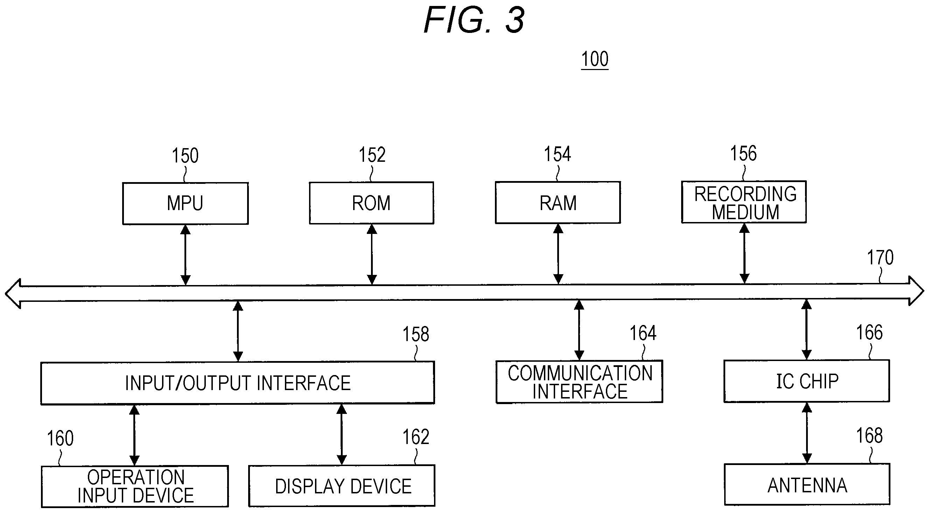

Fig. 3 is an explanatory diagram illustrating an exemplary hardware configuration of the information processing apparatus 100 (first information processing apparatus) according to the present embodiment. Fig. 3 illustrates an exemplary hardware configuration of the information processing apparatus 100 in a case of communicating with the reader/writer 200 by the NFC.

The information processing apparatus 100 includes, for example, an MPU 150, a ROM 152, a RAM 154, a recording medium 156, an input/output interface 158, an operation input device 160, a display device 162, a communication interface 164, an IC chip 166, and an antenna 168. Furthermore, the information processing apparatus 100 connects between the components, for example, by a bus 170 as a data transmission path. Furthermore, the information processing apparatus 100 is driven by, for example, power supplied from an internal power supply such as a battery included in the information processing apparatus 100 or power supplied from a connected external power supply.

The MPU 150 includes one or two or more processors, various processing circuits, or the like including an operation circuit, for example, a Micro Processing Unit (MPU) or the like and functions as the control unit 106 that controls the entire information processing apparatus 100. Furthermore, the MPU 150 serves as, for example, a processing unit 110 to be described later in the information processing apparatus 100.

The ROM 152 stores, for example, control data such as a program to be used by the MPU 150 and an operation parameter. The RAM 154 temporarily stores, for example, a program to be executed by the MPU 150, or the like.

The recording medium 156 is a single recording medium that functions as a storage unit (not illustrated). The recording medium 156 stores, for example, various data such as various applications. Here, as the recording medium 156, for example, a magnetic recording medium such as a hard disk, a nonvolatile memory such as a flash memory, or the like are exemplified. Furthermore, the recording medium 156 may be detachable from the information processing apparatus 100.

The input/output interface 158 connects to, for example, the operation input device 160 and the display device 162. The operation input device 160 functions as the operation unit (not illustrated). Furthermore, the display device 162 functions as the display unit (not illustrated). Here, as the input/output interface 158, for example, a Universal Serial Bus (USB) terminal, a Digital Visual Interface (DVI) terminal, a High-Definition Multimedia Interface (HDMI) (registered trademark) terminal, various processing circuits, or the like are exemplified.

Furthermore, the operation input device 160 is, for example, included in the information processing apparatus 100 and is connected to the input/output interface 158 in the information processing apparatus 100. As the operation input device 160, for example, a button, a direction key, a rotary selector such as a jog dial, or a combination of these, or the like are exemplified.

Furthermore, the display device 162 is, for example, included in the information processing apparatus 100 and is connected to the input/output interface 158 in the information processing apparatus 100. As the display device 162, for example, a liquid crystal display, an organic EL display, or the like are exemplified.

Note that it goes without saying that the input/output interface 158 can be connected to an external device such as an external operation input device (for example, keyboard, mouse, or the like), an external display device, or the like as an external device of the information processing apparatus 100. Furthermore, the display device 162 may be a device that can perform display and a user operation, for example, a touch screen or the like.

The communication interface 164 is a communication unit that is included in the information processing apparatus 100 and performs communication using a single communication method, and functions as the first communication unit 102. Here, as the communication interface 164, for example, a communication antenna and a Radio Frequency (RF) circuit (wireless communication), an IEEE802.15.1 port and a transmission and reception circuit (wireless communication), an IEEE802.11 port and a transmission and reception circuit (wireless communication), a LAN terminal and a transmission and reception circuit (wired communication), or the like are exemplified.

The IC chip 166 and the antenna 168 are communication units, which perform communication using other communication method, included in the information processing apparatus 100 and function as the second communication unit 104. The IC chip 166 and the antenna 168 perform communication by the NFC with an external device that has a reader/writer function such as the reader/writer 200 by using a carrier wave having a predetermined frequency, for example, 13.56 [MHz] or the like.

The antenna 168 serves to receive the carrier wave and transmit a response signal. Furthermore, the IC chip 166 demodulates and processes a carrier wave signal transmitted from the external device such as the reader/writer 200 on the basis of the received carrier wave and transmits the response signal by load modulation.

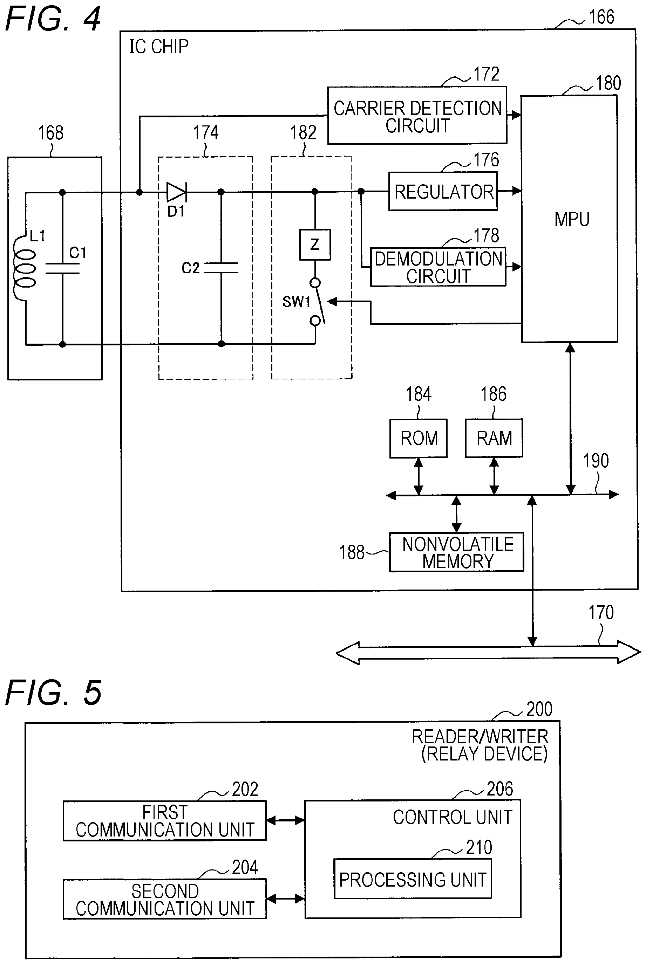

Fig. 4 is an explanatory diagram illustrating an example of configurations of the IC chip 166 and the antenna 168 illustrated in Fig. 3. Note that it is not necessary for the information processing apparatus 100 to include the configuration of the IC chip 166 illustrated in Fig. 3 in a form of an IC chip, for example.

The antenna 168 includes, for example, a resonator including a coil (inductor) L1 having a predetermined inductance and a capacitor C1 having a predetermined capacitance and generates an induced voltage by electromagnetic induction in response to the reception of the carrier wave. Then, the antenna 168 outputs a reception voltage obtained by resonating the induced voltage at a predetermined resonance frequency. Here, the resonance frequency of the antenna 168 is set in accordance with the frequency of the carrier wave, for example, 13.56 [MHz] or the like. With the above configuration, the antenna 168 receives the carrier wave and further transmits the response signal by the load modulation performed by a load modulation circuit 182 included in the IC chip 166.

The IC chip 166 includes, for example, a carrier detection circuit 172, a detection circuit 174, a regulator 176, a demodulation circuit 178, an MPU 180, and the load modulation circuit 182. Note that, although not illustrated in Fig. 4, the IC chip 166 may further include, for example, a protection circuit (not illustrated) that prevents an overvoltage or an overcurrent from being applied to the MPU 180. Here, as the protection circuit (not illustrated), for example, a clamp circuit including a diode or the like is exemplified.

Furthermore, the IC chip 166 includes, for example, a ROM 184, a RAM 186, and a nonvolatile memory 188. The MPU 180, the ROM 184, the RAM 186, and the nonvolatile memory 188 are connected, for example, by a bus 190 as a data transmission path. Furthermore, the bus 190 is connected to the bus 170.

The ROM 184 stores control data such as a program to be used by the MPU 180 and an operation parameter. The RAM 186 temporarily stores the program to be executed by the MPU 180, an operation result, an execution state, or the like.

The nonvolatile memory 188 is another recording medium that functions as the storage unit (not illustrated). The nonvolatile memory 188 stores various data, for example, data regarding the information processing method by the information processing apparatus 100 such as "key information indicating the encryption key used for the processing related to arbitrary encryption and decryption at the time of authentication in the communication using the communication method such as the NFC", setting information (to be described later), or the like, an electronic value (data having money or value equivalent to money), arbitrary identification information such as the ID of the information processing apparatus 100, the ID of the service, or the like, data corresponding to various services, various applications, or the like. As the encryption key indicated by the key information, for example, an encryption key corresponding to an arbitrary encryption method such as a common key encryption method or a public key encryption method is exemplified. Here, as the nonvolatile memory 188, for example, an Electrically Erasable and Programmable Read Only Memory (EEPROM), a flash memory, or the like are exemplified. The nonvolatile memory 188 has, for example, tamper resistant and corresponds to an example of a secure recording medium.

The carrier detection circuit 172 generates, for example, a rectangular detection signal on the basis of the reception voltage transmitted from the antenna 168 and transmits the detection signal to the MPU 180. Furthermore, the MPU 180 uses the transmitted detection signal, for example, as a processing clock for data processing. Here, since the detection signal is based on the reception voltage transmitted from the antenna 168, the detection signal is synchronized with the frequency of the carrier wave transmitted from the external device such as the reader/writer 200. Therefore, the IC chip 166 includes the carrier detection circuit 172 so as to execute the processing with the external device such as the reader/writer 200 in synchronization with the external device.

The detection circuit 174 rectifies the reception voltage output from the antenna 168. Here, the detection circuit 174 includes, for example, a diode D1 and a capacitor C2.

The regulator 176 smooths and stabilizes the reception voltage and outputs a driving voltage to the MPU 180. Here, the regulator 176 uses a DC component of the reception voltage as the driving voltage.

The demodulation circuit 178 demodulates a carrier wave signal on the basis of the reception voltage and outputs data corresponding to the carrier wave signal included in the carrier wave (for example, binary data signal of high level and low level). Here, the demodulation circuit 178 outputs an AC component of the reception voltage as data.

The MPU 180 is driven by using the driving voltage output from the regulator 176 as a power supply and processes the data demodulated by the demodulation circuit 178. Here, the MPU 180 includes one or two or more processors, various processing circuits, or the like, for example, each including an operation circuit such as an MPU.

Furthermore, the MPU 180 generates a control signal used to control the load modulation related to a response to the external device such as the reader/writer 200 according to the processing result. Then, the MPU 180 outputs the control signal to the load modulation circuit 182.

The load modulation circuit 182 includes, for example, a load Z and a switch SW1 and performs the load modulation for selectively connecting (validating) the load Z in accordance with the control signal transmitted from the MPU 180. Here, the load Z includes, for example, a resistance having a predetermined resistance value. Furthermore, the switch SW1 includes, for example, a p-channel Metal Oxide Semiconductor Field effect transistor (MOSFET) and an n-channel MOSFET.

With the above configuration, the IC chip 166 processes the carrier wave signal received by the antenna 168 and makes the antenna 168 transmit the response signal by the load modulation.

For example, by including the configuration illustrated in Fig. 4, the IC chip 166 and the antenna 168 perform communication by the NFC with the external device such as the reader/writer 200 by using the carrier wave having the predetermined frequency. Note that it goes without saying that the configurations of the IC chip 166 and the antenna 168 according to the present embodiment are not limited to those in the example illustrated in Fig. 4.

For example, with the hardware configuration illustrated in Fig. 3, the information processing apparatus 100 communicates with the external device such as the reader/writer 200. Furthermore, for example, with the hardware configuration illustrated in Fig. 3, the information processing apparatus 100 executes processing according to the information processing method by the information processing apparatus 100 to be described later. Note that the hardware configuration of the information processing apparatus 100 according to the present embodiment is not limited to the configuration illustrated in Fig. 3.

For example, in a case where communication with the external device is performed via an external communication device having a function and a configuration similar to those of the communication interface 164 or in a case of a configuration that does not perform the communication using the single communication method, it is not necessary for the information processing apparatus 100 to include the communication interface 164.

Furthermore, for example, in a case where the communication with the external device is performed via an external communication device having a function and a configuration similar to those of the IC chip 166 and the antenna 168, it is not necessary for the information processing apparatus 100 to include the IC chip 166 and the antenna 168.

Furthermore, in a case where communication with the external device is performed by using a communication method other than the NFC such as wireless communication using IEEE 802.15.1, it is not necessary for the information processing apparatus 100 to include the IC chip 166 and the antenna 168. In a case of the above, the information processing apparatus 100 communicates with the external device by including the communication device compatible with the communication method other than the NFC or by using an external communication device compatible with the communication method other than the NFC.

Furthermore, for example, the information processing apparatus 100 may have a configuration that does not include a part of or all of the recording medium 156, the operation input device 160, and the display device 162.

Furthermore, the information processing apparatus 100 can have a hardware configuration, for example, according to an application example of the information processing apparatus 100 to be described later. As an example, in a case where the information processing apparatus 100 is, for example, an IC card, the information processing apparatus 100 may include the IC chip 166 and the antenna 168. In a case where the information processing apparatus 100 is an IC card, for example, the MPU 180 configuring the IC chip 166 executes the processing according to the information processing method by the information processing apparatus 100 to be described later.

Furthermore, for example, the configuration illustrated in Fig. 3 (or configuration according to modification) may be realized by one or two or more Integrated Circuits (IC).

With reference to Fig. 2 again, an example of the configuration of the information processing apparatus 100 will be described. The first communication unit 102 communicates with an external device by communication using a single communication method. Communication of the first communication unit 102 is controlled by the control unit 106, for example.

Here, as the first communication unit 102, for example, a communication antenna and an RF circuit (wireless communication), an IEEE802.15.1 port and a transmission and reception circuit (wireless communication), an IEEE802.11 port and a transmission and reception circuit (wireless communication), a LAN terminal and a transmission and reception circuit (wired communication), or the like are exemplified.

The second communication unit 104 communicates with an external device by communication using other communication method. Communication of the second communication unit 104 is controlled by the control unit 106, for example.

Here, as the second communication unit 104, for example, a communication device compatible with the NFC such as the IC chip 166 and the antenna 168 illustrated in Fig. 3 is exemplified. Note that, as described above, the second communication unit 104 may be a communication device that is compatible with the communication method other than the NFC, for example, wireless communication using IEEE 802.15.1 or the like.

The control unit 106 includes, for example, an MPU or the like and serves to control the entire information processing apparatus 100. Furthermore, the control unit 106 includes, for example, the processing unit 110 and plays a leading role for executing the processing according to the information processing method by the information processing apparatus 100 to be described later.

The processing unit 110 plays a leading role for executing the processing according to the information processing method by the information processing apparatus 100. An example of the processing according to the information processing method by the information processing apparatus 100 will be described in each embodiment described later.

Note that the configuration of the information processing apparatus (first information processing apparatus) according to the present embodiment is not limited to the configuration illustrated in Fig. 2.

For example, the information processing apparatus according to the present embodiment can separately include the processing unit 110 illustrated in Fig. 2 from the control unit 106 (for example, to realize by another processing circuit).

Furthermore, the configuration of the information processing apparatus according to the present embodiment is not limited to the configuration illustrated in Fig. 2, and the information processing apparatus can have a configuration according to how to divide the processing according to the information processing method by the information processing apparatus 100 to be described later.

Furthermore, for example, in a case where communication with the external device is performed via an external communication device having a function and a configuration similar to those of the first communication unit 102 or in a case of the configuration that does not perform communication by using the single communication method described above, it is not necessary for the information processing apparatus according to the present embodiment to include the first communication unit 102.

Furthermore, for example, in a case where communication with the external device is performed via an external communication device having a function and a configuration similar to those of the second communication unit 104, it is not necessary for the information processing apparatus according to the present embodiment to include the second communication unit 104.

### [1-2] Reader/writer 200 (Relay Device)

Fig. 5 is a functional block diagram illustrating an example of a configuration of the reader/writer 200 (relay device) according to the present embodiment.

The reader/writer 200 includes, for example, a first communication unit 202, a second communication unit 204, and a control unit 206.

Furthermore, the reader/writer 200 may include, for example, a ROM (not illustrated), a RAM (not illustrated), a storage unit (not illustrated), an operation unit that can be operated by a user (not illustrated), a display unit (not illustrated) that displays various screens on a display screen, or the like. The reader/writer 200 connects between the components, for example, by a bus as a data transmission path.

The ROM (not illustrated) stores control data such as a program to be used by the control unit 206 and an operation parameter. The RAM (not illustrated) temporarily stores a program to be executed by the control unit 206, or the like.

The storage unit (not illustrated) is a storage unit included in the reader/writer 200 and stores various data, for example, various applications or the like. Here, as the storage unit (not illustrated), for example, a magnetic recording medium such as a hard disk, a nonvolatile memory such as a flash memory, or the like are exemplified. Furthermore, the storage unit (not illustrated) may be detachable from the reader/writer 200.

As the operation unit (not illustrated), an operation input device similar to the operation input device 160 illustrated in Fig. 3 is exemplified. Furthermore, as the display unit (not illustrated), a display device similar to the display device 162 illustrated in Fig. 3 is exemplified.

### [Exemplary Hardware Configuration of Reader/writer 200]

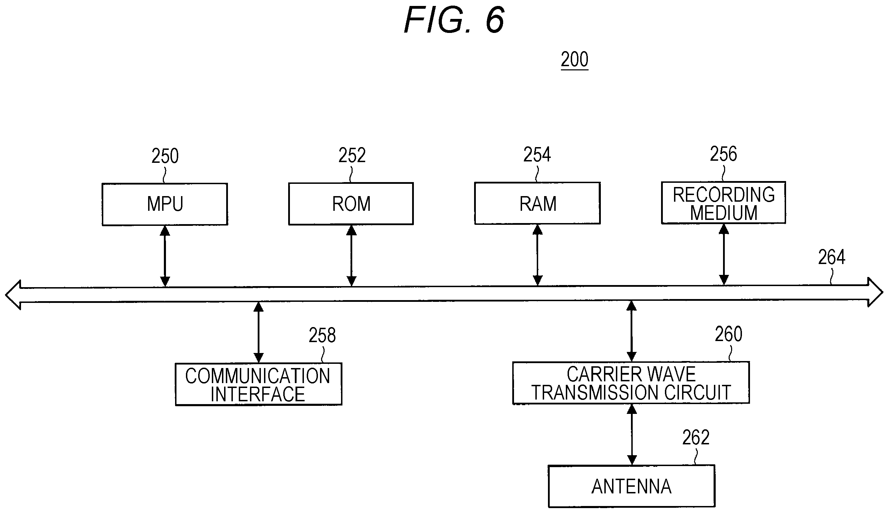

Fig. 6 is an explanatory diagram illustrating an exemplary hardware configuration of the reader/writer 200 (relay device) according to the present embodiment.

The reader/writer 200 includes, for example, an MPU 250, a ROM 252, a RAM 254, a recording medium 256, a communication interface 258, a carrier wave transmission circuit 260, and an antenna 262. Furthermore, the reader/writer 200 connects between the components, for example, by a bus 264 as a data transmission path. Furthermore, the reader/writer 200 is driven, for example, by power supplied from an internal power supply such as a battery included in the reader/writer 200, power supplied from a connected external power supply, or the like.

The MPU 250 includes one or two or more processors, various processing circuits, or the like each including an operation circuit, for example, an MPU or the like and functions as the control unit 206 that controls the entire reader/writer 200. Furthermore, the MPU 250 serves as, for example, a processing unit 210 to be described later in the reader/writer 200.

The ROM 252 stores, for example, control data such as a program to be used by the MPU 250 and an operation parameter. The RAM 254 temporarily stores, for example, a program to be executed by the MPU 250, or the like.

The recording medium 256 functions as a storage unit (not illustrated) and stores, for example, various data such as various applications. Here, as the recording medium 256, for example, a magnetic recording medium such as a hard disk, a nonvolatile memory such as a flash memory, or the like are exemplified. Furthermore, the recording medium 256 may be detachable from the reader/writer 200.

The communication interface 258 is a communication unit that is included in the reader/writer 200 and performs communication using a single communication method, and functions as the first communication unit 202 that wirelessly or wiredly communicates with the external device such as the server 300 via a network (or directly). Here, as the communication interface 258, for example, a communication antenna and an RF circuit (wireless communication), an IEEE802.15.1 port and a transmission and reception circuit (wireless communication), an IEEE802.11 port and a transmission and reception circuit (wireless communication), a LAN terminal and a transmission and reception circuit (wired communication), or the like are exemplified. Furthermore, the communication interface 258 may have any configuration compatible with the network according to the present embodiment.

The carrier wave transmission circuit 260 and the antenna 262 are communication units that are included in the reader/writer 200 and perform communication using other communication method and function as the second communication unit 204 that wirelessly or wiredly communicates with the external device such as the information processing apparatus 100.

The antenna 262 includes, for example, a resonator that includes a coil having a predetermined inductance as a transmission/reception antenna and a capacitor having a predetermined capacitance and a demodulation circuit. Then, by receiving a carrier wave having a predetermined frequency, for example, 13.56 [MHz] or the like, the antenna 262 demodulates, for example, data transmitted from the external device such as the information processing apparatus 100 by the load modulation or the like. Note that, for example, in a case where the carrier wave transmission circuit 260 includes the demodulation circuit, the antenna 262 may include the resonator.

The carrier wave transmission circuit 260 includes, for example, a modulation circuit that performs modulation such as Amplitude Shift Keying (ASK) and an amplification circuit that amplifies an output of the modulation circuit and transmits a carrier wave on which a carrier wave signal is applied from the transmission/reception antenna of the antenna 262. Furthermore, the carrier wave transmission circuit 260 may include, for example, a demodulation circuit that demodulates a signal received by the antenna 262. The demodulation circuit demodulates, for example, the signal received by the antenna 262 by performing envelope detection on an amplitude change of a voltage between the modulation circuit (or amplification circuit) and the resonator of the antenna 262 and binarizing the detected signal. Note that the demodulation circuit can demodulate the signal received by the antenna 262, for example, by using a phase change of the voltage between the modulation circuit (or amplification circuit) and the resonator of the antenna 262.

By including the carrier wave transmission circuit 260, the reader/writer 200 has an initiator function in the NFC and serves as a so-called reader/writer. Here, as the carrier wave signal transmitted by the carrier wave transmission circuit 260 from the antenna 262, for example, various signals such as a polling signal, a signal indicating a reading request to be described later, or the like are exemplified. Furthermore, in the carrier wave transmission circuit 260, for example, the MPU 250 controls transmission of the carrier wave.

For example, by including the hardware configuration illustrated in Fig. 6, the reader/writer 200 serves as a relay device. Note that the hardware configuration of the reader/writer 200 according to the present embodiment is not limited to the configuration illustrated in Fig. 6.

For example, in a case where communication with the external device is performed via an external communication device having a function similar to that of the communication interface 258, it is not necessary for the reader/writer 200 to include the communication interface 258.

Furthermore, in a case where communication with the external device is performed via an external communication device having a function similar to those of the carrier wave transmission circuit 260 and the antenna 262, it is not necessary for the reader/writer 200 to include the carrier wave transmission circuit 260 and the antenna 262.

Furthermore, in a case where communication with the external device is performed by using a communication method other than the NFC such as wireless communication using IEEE 802.15.1, it is not necessary for the reader/writer 200 to include the carrier wave transmission circuit 260 and the antenna 262. In a case of the above, the reader/writer 200 communicates with the external device by including the communication device compatible with the communication method other than the NFC or by using the external communication device compatible with the communication method other than the NFC.

Furthermore, the reader/writer 200 can have, for example a configuration that does not include the recording medium 256.

Furthermore, the reader/writer 200 can have a hardware configuration, for example, according to an application example of the reader/writer 200 to be described later.

Furthermore, for example, the configuration illustrated in Fig. 6 (or configuration according to modification) may be realized by one or two or more ICs.

With reference to Fig. 5 again, an example of the configuration of the reader/writer 200 will be described.

The first communication unit 202 communicates with an external device by communication using a single communication method. Communication of the first communication unit 202 using a single communication method is controlled by, for example, the control unit 206.

Here, as the first communication unit 202, for example, a communication antenna and an RF circuit (wireless communication), an IEEE802.15.1 port and a transmission and reception circuit (wireless communication), an IEEE802.11 port and a transmission and reception circuit (wireless communication), a LAN terminal and a transmission and reception circuit (wired communication), or the like are exemplified.

The second communication unit 204 communicates with an external device by communication using other communication method. Communication of the second communication unit 204 using the other communication method is controlled by, for example, the control unit 206.

Here, as the second communication unit 204, for example, a communication device compatible with the NFC such as the carrier wave transmission circuit 260 and the antenna 262 illustrated in Fig. 6 is exemplified. Note that, as described above, the second communication unit 204 may be a communication device that is compatible with the communication method other than the NFC, for example, wireless communication using IEEE 802.15.1 or the like.

The control unit 206 includes, for example, an MPU or the like and serves to control the entire reader/writer 200. Furthermore, the control unit 206 may include the processing unit 210 that can execute arbitrary processing, for example, communication control processing, settlement processing, or the like.

Note that the configuration of the reader/writer (relay device) according to the present embodiment is not limited to the configuration illustrated in Fig. 5.

For example, the reader/writer according to the present embodiment can separately include the processing unit 210 illustrated in Fig. 5 from the control unit 206 (for example, to realize by another processing circuit).

Furthermore, for example, in a case where communication with the external device is performed via an external communication device having a function and a configuration similar to those of the first communication unit 202, it is not necessary for the reader/writer according to the present embodiment to include the first communication unit 202.

Furthermore, for example, in a case where communication with the external device is performed via an external communication device having a function and a configuration similar to those of the second communication unit 204, it is not necessary for the reader/writer according to the present embodiment to include the second communication unit 204.

### [1-3] Server 300 (Second Information Processing Apparatus)

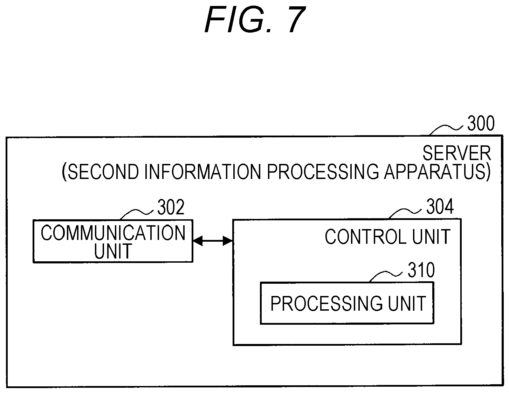

Fig. 7 is a functional block diagram illustrating an exemplary configuration of the server 300 (second information processing apparatus) according to the present embodiment. The server 300 includes, for example, a communication unit 302 and a control unit 304.

Furthermore, the server 300 may, for example, include a ROM (not illustrated), a RAM (not illustrated), a storage unit (not illustrated), an operation unit that can be operated by a user of the server 300 (not illustrated), a display unit (not illustrated) that displays various screens on a display screen, or the like. The server 300 connects between the components, for example, by a bus as a data transmission path.

The ROM (not illustrated) stores control data such as a program to be used by the control unit 304 and an operation parameter. The RAM (not illustrated) temporarily stores a program to be executed by the control unit 304, or the like.

The storage unit (not illustrated) is a storage unit included in the server 300 and stores various data, for example, data regarding an information processing method by the server 300, various applications, or the like. Here, as the storage unit (not illustrated), for example, a magnetic recording medium such as a hard disk, a nonvolatile memory such as a flash memory, or the like are exemplified. Furthermore, the storage unit (not illustrated) may be detachable from the server 300.

As the operation unit (not illustrated), an operation input device indicated in an exemplary hardware configuration of the server 300 to be described later is exemplified. Furthermore, as the display unit (not illustrated), a display device indicated in the exemplary hardware configuration of the server 300 to be described later is exemplified.

### [Exemplary Hardware Configuration of Server 300]

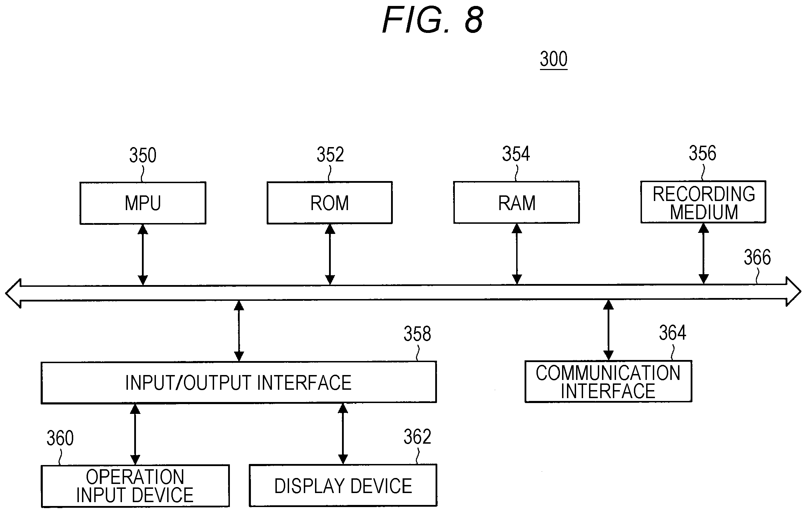

Fig. 8 is an explanatory diagram illustrating an exemplary hardware configuration of the server 300 (second information processing apparatus) according to the present embodiment. The server 300 includes, for example, an MPU 350, a ROM 352, a RAM 354, a recording medium 356, an input/output interface 358, an operation input device 360, a display device 362, and a communication interface 364. Furthermore, the server 300 connects between the components, for example, by a bus 366 as a data transmission path. Furthermore, the server 300 is driven by, for example, power supplied from an internal power supply such as a battery included in the server 300, power supplied from a connected external power supply, or the like.

The MPU 350 includes one or two or more processors, various processing circuits, or the like each including an operation circuit, for example, an MPU or the like and functions as the control unit 304 that controls the entire server 300. Furthermore, the MPU 350 serves as, for example, a processing unit 310 to be described later in the server 300. Note that the processing unit 310 may include a dedicated (or general-purpose) circuit (for example, a processor different from MPU 350, or the like).

The ROM 352 stores, for example, control data such as a program to be used by the MPU 350 and an operation parameter. The RAM 354 temporarily stores, for example, a program to be executed by the MPU 350, or the like.

The recording medium 356 functions as a storage unit (not illustrated) and stores various data, for example, the data regarding the information processing method by the server 300, various applications, or the like. Here, as the recording medium 356, for example, a magnetic recording medium such as a hard disk, a nonvolatile memory such as a flash memory, or the like are exemplified. Furthermore, the recording medium 356 may be detachable from the server 300.

The input/output interface 358 connects to, for example, the operation input device 360 and the display device 362. The operation input device 360 functions as the operation unit (not illustrated). Furthermore, the display device 362 functions as the display unit (not illustrated). Here, as the input/output interface 358, for example, a USB terminal, a DVI terminal, an HDMI (registered trademark) terminal, various processing circuits, or the like are exemplified.

Furthermore, the operation input device 360 is, for example, included in the server 300 and is connected to the input/output interface 358 in the server 300. As the operation input device 360, for example, a button, a direction key, a rotary selector such as a jog dial, or a combination of these, or the like are exemplified.

Furthermore, the display device 362 is, for example, included in the server 300 and is connected to the input/output interface 358 in the server 300. As the display device 362, for example, a liquid crystal display, an organic EL display, or the like are exemplified.

Note that it goes without saying that the input/output interface 358 can be connected to an external device such as an operation input device (for example, keyboard, mouse, and the like) outside the server 300 or an external display device. Furthermore, the display device 362 may be a device that can perform display and a user operation, for example, a touch panel or the like.

The communication interface 364 is a communication unit included in the server 300 and functions as the communication unit 302 that wirelessly or wiredly communicates with the external device such as the reader/writer 200 via a network (or directly). Here, as the communication interface 364, for example, a communication antenna and an RF circuit (wireless communication), an IEEE802.15.1 port and a transmission and reception circuit (wireless communication), an IEEE802.11 port and a transmission and reception circuit (wireless communication), a LAN terminal and a transmission and reception circuit (wired communication), or the like are exemplified. Furthermore, the communication interface 364 may have any configuration compatible with the network according to the present embodiment.

For example, with the hardware configuration illustrated in Fig. 8, the server 300 executes the processing according to the information processing method by the server 300 to be described later. Note that the hardware configuration of the server 300 according to the present embodiment is not limited to the configuration illustrated in Fig. 8.

For example, in a case where communication with an external device or the like is performed via a connected external communication device, it is not necessary for the server 300 to include the communication interface 364. Furthermore, the communication interface 364 may have a configuration which can communicate with, for example, one or two or more external devices by using a plurality of communication methods.

Furthermore, for example, the server 300 can have a configuration that does not include a part of or all of the recording medium 356, the operation input device 360, and the display device 362.

Furthermore, the server 300 can have a hardware configuration, for example, according to an application example of the server 300 to be described later.

Furthermore, for example, a part of or all of the hardware configuration illustrated in Fig. 8 (or configuration according to modification) may be realized by one or two or more ICs.

With reference to Fig. 7 again, an example of the configuration of the server 300 will be described. The communication unit 302 is a communication unit included in the server 300 and wirelessly or wiredly communicates with the external device such as the reader/writer 200 via a network (or directly). Furthermore, communication of the communication unit 302 is controlled by the control unit 304, for example.

Here, as the communication unit 302, for example, a communication antenna, an RF circuit, a LAN terminal, a transmission/reception circuit, or the like are exemplified. However, the configuration of the communication unit 302 is not limited to those described above. For example, the communication unit 302 can have a configuration compatible with an arbitrary standard that can communicate with a USB terminal, a transmission/reception terminal, or the like and an arbitrary configuration that can communicate with an external device via a network. Furthermore, the communication unit 302 may have a configuration which can communicate with, for example, one or two or more external devices by using a plurality of communication methods.

The control unit 304 includes, for example, an MPU or the like and serves to control the entire server 300. Furthermore, the control unit 304 includes, for example, the processing unit 310 and plays a leading role to execute the processing according to the information processing method by the server 300 to be described later.

The processing unit 310 plays a leading role to execute the processing according to the information processing method according to the present embodiment by the server 300. An example of the processing according to the information processing method according to the present embodiment by the server 300 will be described later.

Note that the configuration of the server (second information processing apparatus) according to the present embodiment is not limited to the configuration illustrated in Fig. 7.

For example, the server according to the present embodiment can separately include the processing unit 310 illustrated in Fig. 7 from the control unit 304 (for example, to realize by another processing circuit).

Furthermore, the configuration of the server according to the present embodiment is not limited to the configuration illustrated in Fig. 7, and the server can have a configuration according to how to divide the processing according to the information processing method by the server 300 to be described later.

Furthermore, for example, in a case where communication with the external device is performed via an external communication device having a function and a configuration similar to those of the communication unit 302, it is not necessary for the server according to the present embodiment to include the communication unit 302.

### [1-4] Application Example of Each Device Included in Information Processing System According to Present Embodiment

The information processing apparatus 100 (first information processing apparatus) has been described above as a component of the information processing system according to the present embodiment. However, the present embodiment is not limited to the mode. The present embodiment can be applied to various apparatuses that can execute the processing according to the information processing method by the information processing apparatus 100 to be described later, for example, "a communication device such as a smartphone", "an IC card", a tablet device", "a game machine", or the like. Furthermore, the present embodiment can be applied to, for example, a processing IC that can be incorporated with the above apparatus.

Furthermore, the reader/writer 200 (relay device) has been described as a component of the information processing system according to the present embodiment. However, the present embodiment is not limited to the mode. The present embodiment can be applied to any apparatus that has a function for relaying communication between devices, for example, "a reader/writer", "a device having a reader/writer function", "a communication device that performs communication by wireless communication using IEEE802.15.1 such as BLE or the like", or the like. Furthermore, the present embodiment can be applied to, for example, a processing IC that can be incorporated with the above apparatus.

Furthermore, the server 300 (second information processing apparatus) has been described as a component of the information processing system according to the present embodiment. However, the present embodiment is not limited to the mode. The present embodiment can be applied to various devices that can execute the processing according to the information processing method by the server 300 to be described later, for example, "a computer such as a Personal Computer (PC) or a server", "a tablet device", "a communication device such as a smartphone", "a game machine", or the like. Furthermore, the present embodiment can be applied to, for example, a processing IC that can be incorporated with the above apparatus.

Furthermore, the server according to the present embodiment may be applied to a processing system on the premise of connection to the network (or communication between devices), for example, cloud computing or the like. As an example of the processing system, for example, "a system in which a single device included in the processing system executes a part of the processing according to the information processing method by the server 300 to be described later and another device included in the processing system executes processing other than a part of the processing according to the information processing method by the server 300" or the like are exemplified.

### [2] Information Processing Method According to Present Embodiment

Next, the processing according to the information processing method according to the present embodiment will be described using an information processing system 1000 illustrated in Fig. 1 as an example.

### [2-1] Information Processing Method According to First Embodiment

### [2-1-1] Outline of Information Processing System 1000 to Which Information Processing Method According to First Embodiment Is Applied

As described above, for example, when another device reads data that needs authority to read and is stored in a single device, authentication is performed between the single device and the other device, and the data is read after the authentication is completed. That is, the other device reads the data that needs the authority to read after the authentication of the authority is completed.

Here, the authentication of the authority is performed by, for example, "a method for transmitting a value referred to as a random challenge (hereinafter, referred to as "random challenge") by the single device, performing an operation by using an authentication key (encryption key used for authentication) with respect to the value by the other device, and transmitting the operation result to the single device" (challenge and response method).

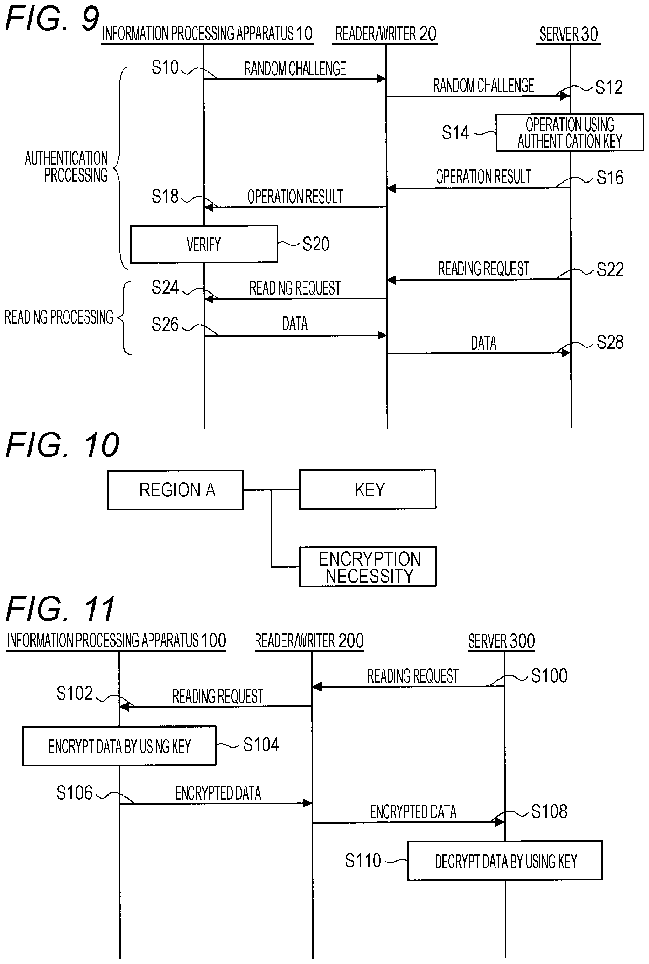

Fig. 9 is an explanatory diagram illustrating an example of communication regarding data reading using the authentication using the existing challenge and response method. Fig. 9 illustrates an example of communication using the communication using the NFC in the information processing system having the configuration similar to that of the information processing system 1000 illustrated in Fig. 1. That is, in the example illustrated in Fig. 9, the communication using the NFC is performed between an information processing apparatus 10 and a reader/writer 20, and network communication is performed between the reader/writer 20 and a server 30.

The information processing apparatus 10 transmits a random challenge to the reader/writer 20 (S10). The reader/writer 20 that has received the random challenge transmitted from the information processing apparatus 10 in step S10 transmits the received random challenge to the server 30 (S12).

The server 30 that has received the random challenge performs a predetermined operation using an authentication key (S14) and transmits the operation result to the reader/writer 20 (S16). As the predetermined operation, processing for encrypting the random challenge using the authentication key is exemplified. Furthermore, the operation result transmitted from the server 30 in step S16 corresponds to the encrypted random challenge.

The reader/writer 20 that has received the operation result transmitted from the server 30 in step S16 transmits the received operation result to the information processing apparatus 10 (S18).

The information processing apparatus 10 that has received the operation result transmitted from the reader/writer 20 in step S18 verifies the received operation result (S20). The verification in step S20 includes, for example, "to decrypt the received operation result by using a predetermined encryption key and verify whether or not the decrypted value coincides with the random challenge" or "to perform the operation same as that in step S14 by the information processing apparatus 10 and verify whether or not the operation result coincides with the received operation result".

In a case where it is determined in step S20 that the verification result indicates normal, the information processing apparatus 10 authenticates that the server 30 is a device that has the authority to read. That is, the processing in steps S10 to S20 corresponds to the authentication processing. Hereinafter, an example of processing in a case where the authentication is normally completed in step S20 will be described.

The server 30 that has transmitted the operation result in step S16 transmits a reading request (S22). The reading request is, for example, data including a data reading command and information indicating a region of a recording medium from which data is read.

The reader/writer 20 that has received the reading request transmitted from the server 30 in step S22 transmits the received reading request to the information processing apparatus 10 (S24).

The information processing apparatus 10 that has received the reading request transmitted from the reader/writer 20 in step S26 reads data from the region of the recording medium indicated by the reading request and transmits the read data (S26). The reader/writer 20 that has received the data transmitted from the information processing apparatus 10 in step S26 transmits the received data to the server 30 (S28).

Data is read by using the authentication using the existing challenge and response method, for example, as illustrated in Fig. 9.

In a case where the authentication using the existing challenge and response method is used, as illustrated in Fig. 9, communication regarding the data reading is performed after performing communication for the authentication using the challenge and response method. Therefore, in a case where the authentication using the existing challenge and response method is used, security regarding the data reading can be ensured.

However, in a case where the authentication using the existing challenge and response method is used, the communication regarding the data reading is performed after the communication regarding the authentication using the challenge and response method is performed. Therefore, the communication time is prolonged, and a processing time of the entire system is prolonged.

Therefore, in the information processing system 1000 (may be indicated as "information processing system 1000 according to first embodiment" below) to which the information processing method according to the first embodiment is applied, the authentication using the existing challenge and response method is not performed, and both of the authentication and the data reading are performed through the communication regarding the data reading.

In the information processing system 1000 according to the first embodiment, by executing the processing in the information processing apparatus 100 to be described below (processing according to information processing method by information processing apparatus 100), "to perform both of the authentication and the data reading through the communication regarding the data reading" is realized.

### [2-1-2] Processing According to Information Processing Method by Information Processing System 1000 According to First Embodiment

Next, an example of processing according to the information processing method by the information processing system 1000 according to the first embodiment will be described.

In a case where the reading request is acquired, the information processing apparatus 100 encrypts data corresponding to the region of the recording medium indicated by the reading request by using an encryption key corresponding to the region indicated by the reading request. The information processing apparatus 100 encrypts data by performing an operation using an arbitrary encryption method, for example, Data Encryption Standard (DES), Advanced Encryption Standard (AES), or the like. As the recording medium from which the information processing apparatus 100 reads data, for example, a recording medium having tamper resistant such as the nonvolatile memory 188 illustrated in Fig. 4 is exemplified. Then, the information processing apparatus 100 transmits the encrypted data.

In the information processing apparatus 100, for example, the processing unit 110 executes the processing according to the information processing method by the information processing apparatus 100 (the same applies to other embodiments) such as processing for reading the data corresponding to the reading request from the recording medium, processing for encrypting the read data, processing for making the communication device transmit the encrypted data, or the like.

The reading request according to the present embodiment is, for example, data including a data reading command and information indicating the region of the recording medium from which data is read.

The reading request may include a plurality of pieces of information indicating the region, and the information indicating the region may indicate a plurality of regions. That is, one or a plurality of pieces of data may be read from one or a plurality of regions in response to the reading request according to the present embodiment.

Note that the reading request according to the present embodiment is not limited to the example described above. For example, the reading request according to the present embodiment may include other information such as information regarding encryption. As the information regarding the encryption according to the present embodiment, for example, one or both of data indicating whether or not to encrypt the data read from the region indicated by the information indicating the region and data specifying the encryption key are exemplified. Furthermore, as indicated by an information processing method according to a fourth embodiment to be described later, the information regarding the encryption according to the present embodiment may further include data indicating whether or not to generate "the encryption key corresponding to the reading request".

More specifically, the information processing apparatus 100 reads data from the region indicated by the information indicating the region included in the reading request. Then, the information processing apparatus 100 encrypts the read data by using an encryption key corresponding to the region indicated by the reading request.

Furthermore, in a case where the reading request indicates the plurality of regions, the information processing apparatus 100 reads data from each of the plurality of regions. Then, the information processing apparatus 100 encrypts the data read from each of the regions indicated by the reading request by using the encryption key corresponding to the region indicated by the reading request.

The information processing apparatus 100 specifies the encryption key corresponding to the region indicated by the reading request, for example, on the basis of setting information associated with the region of the recording medium, for example. Then, the information processing apparatus 100 encrypts the read data (data corresponding to region indicated by reading request) by using the specified encryption key.

The setting information according to the present embodiment is data indicating setting regarding the encryption of the region of the recording medium.

As the setting information, for example, "a table (or database) recording an address indicating the region of the recording medium and an encryption key in association for each region" is exemplified. Furthermore, the setting information may be further associated with information for defining whether or not the encryption is performed (hereinafter, referred to as "encryption necessity information") for each region. As the encryption necessity information, for example, data indicating any one of "constantly encrypt", "constantly plaintext" (constantly do not perform encryption), or "follow the reading request" is exemplified. Note that the setting information according to the present embodiment is not limited to the table (or database) as described above and may be data in any format, for example, data for each region, or the like.

In a case where the setting information is included in the encryption necessity information, the information processing apparatus 100 determines whether or not to encrypt the data corresponding to the region indicated by the reading request on the basis of the setting information. Then, the information processing apparatus 100 selectively encrypts the data corresponding to the region indicated by the reading request according to the determination result. As a specific example, in a case where it is determined that the data corresponding to the region indicated by the reading request is encrypted, the information processing apparatus 100 encrypts the data corresponding to the region indicated by the reading request. Furthermore, in a case where it is not determined that the data corresponding to the region indicated by the reading request is encrypted, the information processing apparatus 100 does not encrypt the data corresponding to the region indicated by the reading request.

Note that the setting information according to the present embodiment is not limited to the example described above.

For example, as indicated in the information processing method according to the fourth embodiment to be described later, the setting information may be further associated with information for defining whether or not to generate "an encryption key corresponding to the reading request" (hereinafter, referred to as "encrypting key generation necessity information") for each region. As the encrypting key generation necessity information, for example, data indicating any one of "to constantly generate "the encryption key corresponding to the reading request"", "not to constantly generate "the encryption key corresponding to the reading request"", or "to follow the reading request" is exemplified.

Fig. 10 is an explanatory diagram illustrating an outline of setting defined by the setting information according to the present embodiment and illustrates an example of setting in a region A. In Fig. 10, the encryption key is indicated as a "key" (the same applies to other drawings).

As illustrated in Fig. 10, the information processing apparatus 100 defines a region, an encryption key, and necessity of encryption (whether or not to perform encryption) in accordance with the setting information. The information processing apparatus 100 specifies the encryption key corresponding to the region indicated by the reading request with reference to the setting information corresponding to the region indicated by the reading request. Furthermore, the information processing apparatus 100 specifies whether or not to perform the encryption on the data read from the region with reference to the setting information corresponding to the region indicated by the reading request.

Note that, as described above, in the setting information, it is not necessary to associate the region with the encryption necessity. Furthermore, in the setting information, it is not necessary to associate the encryption key with the region associated with the encryption necessity information indicating that the encryption is not performed.

In a case where the encryption key corresponding to the region indicated by the reading request is not specified or in a case where the encryption necessity information included in the setting information indicates that the encryption is not performed, the information processing apparatus 100 transmits the data corresponding to the region indicated by the reading request without encrypting the data.

Fig. 11 is an explanatory diagram illustrating an example of the processing of the information processing system 1000 according to the first embodiment. In Fig. 11, the data that has been encrypted is indicated as "encrypted data" (the same applies to other drawings).

The server 300 transmits the reading request (S100).

The reader/writer 200 that has received the reading request transmitted from the server 300 in step S100 transmits the received reading request to the information processing apparatus 100 (S102).

Here, in a case where the reader/writer 200 stores the setting information in the recording medium, the reader/writer 200 may encrypt a part of the reading request received by using the encryption key corresponding to the region indicated by the reading request and transmit the encrypted reading request to the information processing apparatus 100.

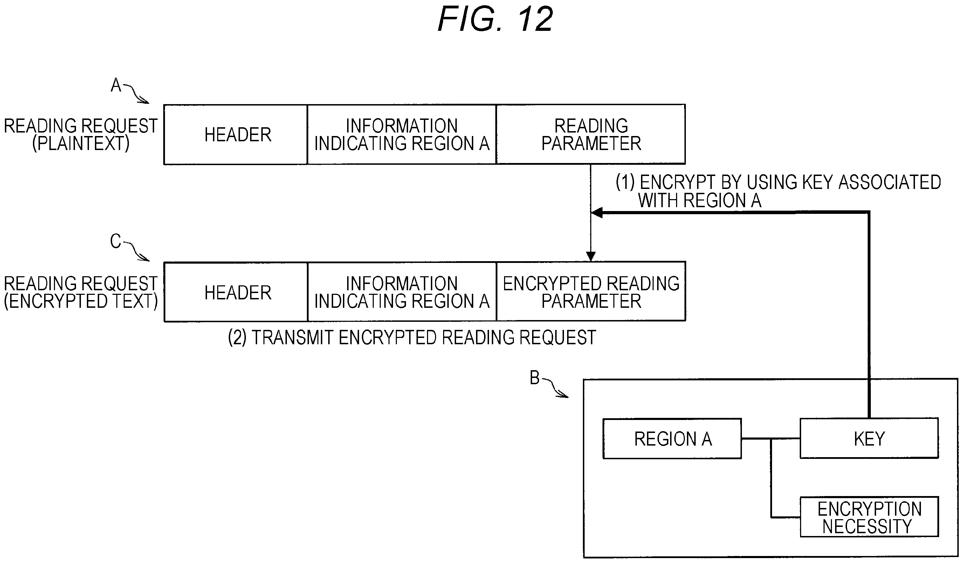

Fig. 12 is an explanatory diagram illustrating an example of processing of the reader/writer 200 (relay device) included in the information processing system 1000 according to the first embodiment. A of Fig. 12 illustrates an example of the reading request transmitted from the server 300, and B of Fig. 12 illustrates an outline of setting defined by the setting information as in Fig. 10. C of Fig. 12 illustrates an example of the reading request encrypted by the reader/writer 200.

For example, as illustrated in Fig. 12, in a case where the reader/writer 200 encrypts the reading request received by using the encryption key corresponding to the region indicated by the reading request, the information processing apparatus 100 that receives the encrypted reading request decrypts the reading request, which has been partially encrypted, by using the encryption key corresponding to the region indicated by the reading request and executes processing.

With reference to Fig. 11 again, an example of processing of the information processing system 1000 according to the first embodiment will be described. The information processing apparatus 100 that has received the reading request transmitted from the reader/writer 200 in step S102 encrypts the data corresponding to the region indicated by the reading request by using the encryption key corresponding to the region indicated by the reading request (S104). Then, the information processing apparatus 100 transmits the encrypted data (S106).

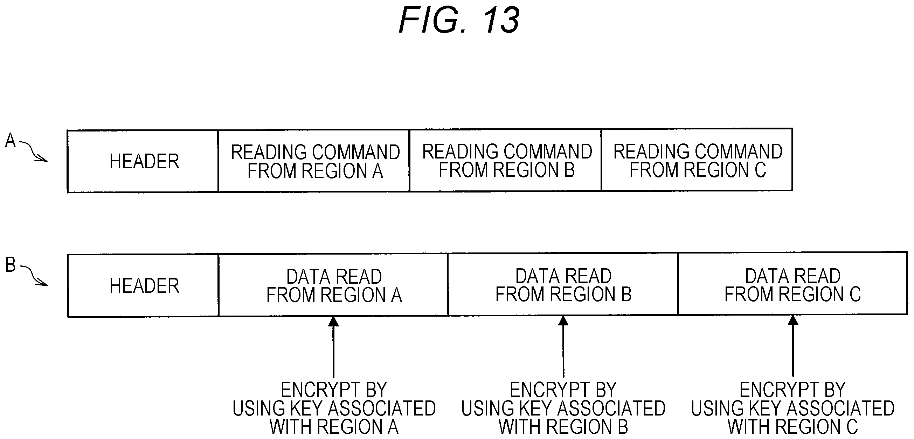

Fig. 13 is an explanatory diagram for explaining an example of processing of the information processing system 1000 according to the first embodiment. A of Fig. 13 schematically illustrates an example of the reading request transmitted from the server 300, and B of Fig. 13 illustrates an example of the encrypted data transmitted by the information processing apparatus 100.

As illustrated in A of Fig. 13, there is a case where the reading request defines data reading from the plurality of regions. As described above, in a case where the reading request indicates the plurality of regions, the information processing apparatus 100 encrypts the data read for each region indicated by the reading request by using the encryption key corresponding to the region indicated by the reading request as illustrated in B of Fig. 13.

With reference to Fig. 11 again, an example of processing of the information processing system 1000 according to the first embodiment will be described. The reader/writer 200 that has received the encrypted data transmitted from the information processing apparatus 100 in step S106 transmits the received encrypted data to the server 300 (S108).

The server 300 that has received the encrypted data transmitted from the reader/writer 200 in step S108 decrypts the received encrypted data by using the encryption key corresponding to the region indicated by the reading request transmitted in step S100 (S110). The server 300 may use the decrypted data, for example, for arbitrary processing depending on a service provided by the server 300.

In the information processing system 1000 according to the first embodiment, for example, by executing the processing illustrated in Fig. 11, data reading from the information processing apparatus 100 by the server 300 is realized.

Here, even if a device other than a device having a valid encryption key such as the server 300 (hereinafter, referred to as "third party device") acquires the encrypted data transmitted from the information processing apparatus 100, the third party device cannot decrypt the encrypted data. Therefore, in the information processing system 1000 according to the first embodiment, the security for reading data that needs authority to read is ensured.

Furthermore, when the communication of the information processing system 1000 according to the first embodiment illustrated in Fig. 11 is compared with the communication regarding the data reading by using the authentication by the existing challenge and response method illustrated in Fig. 9, the number of times of communication of the communication illustrated in Fig. 11 is smaller.

That is, the information processing system 1000 according to the first embodiment shortens a time for communication and shortens a processing time of the entire system than a case where the authentication by using the existing challenge and response method is used.

Therefore, in the information processing system 1000 including the information processing apparatus 100 according to the first embodiment, the reduction in the processing time regarding reading is realized while ensuring the security regarding the data reading.

Note that the processing of the information processing apparatus 100 according to the first embodiment is not limited to the example described above.

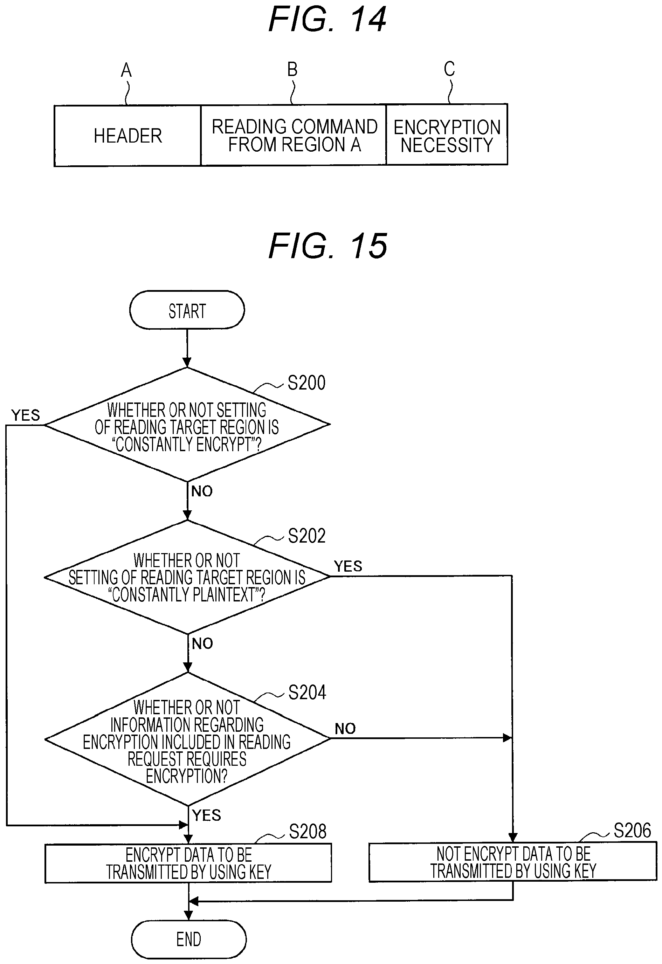

As described above, the reading request may include information regarding the encryption. Fig. 14 is an explanatory diagram for explaining an example of the reading request according to the present embodiment and illustrates an example of the reading request including the information regarding the encryption. The "encryption request" illustrated in Fig. 14 corresponds to the information regarding the encryption.

In a case where it is not determined that the data corresponding to the region indicated by the reading request is encrypted on the basis of the setting information when the reading request includes the information regarding the encryption as illustrated in Fig. 14, the information processing apparatus 100 may selectively encrypt the data corresponding to the region indicated by the reading request on the basis of the information regarding the encryption included in the reading request. Here, the selective encryption based on the information regarding the encryption includes "whether or not to perform encryption" or "whether or not to perform encryption and which encryption key is used in a case where the encryption is performed".

As a specific example, in a case where the information regarding the encryption included in the reading request indicates that the encryption is performed, the information processing apparatus 100 encrypts the data corresponding to the region indicated by the reading request. At this time, the information processing apparatus 100 may perform the encryption by using an encryption key specified by the information regarding the encryption. Furthermore, in a case where the information regarding the encryption included in the reading request does not indicate that the encryption is performed, the information processing apparatus 100 does not encrypt the data corresponding to the region indicated by the reading request.

That is, in a case where the processing is executed on the basis of the information regarding the encryption included in the reading request, the information processing apparatus 100 transmits the data corresponding to the region indicated by the reading request or the encrypted data.

Fig. 15 is a flowchart illustrating an example of the processing of the information processing apparatus 100 according to the first embodiment. Fig. 15 illustrates an example of the processing of the information processing apparatus 100 after receiving the reading request including the information regarding the encryption. In Fig. 15, the region indicated by the reading request is indicated as a "reading target region".

The information processing apparatus 100 determines whether or not the setting of the region indicated by the reading request is "constantly encrypt" (S200). The information processing apparatus 100 makes the determination in step S200 by referring to the encryption necessity information included in the setting information.

In a case where it is determined in step S200 that the setting is "constantly encrypt", the information processing apparatus 100 executes processing in step S208 to be described later.

Furthermore, in a case where it is not determined in step S200 that the setting is "constantly encrypt", the information processing apparatus 100 determines whether or not the setting of the region indicated by the reading request is "constantly plaintext" (S202). The information processing apparatus 100 makes the determination in step S202 by referring to the encryption necessity information included in the setting information.

In a case where it is determined in step S202 that the setting is "constantly plaintext", the information processing apparatus 100 executes processing in step S206 to be described later.

Furthermore, in a case where it is not determined in step S200 that the setting is "constantly plaintext", the information processing apparatus 100 determines whether or not the information regarding the encryption included in the reading request requires encryption (S204).

In a case where it is not determined in step S204 that the encryption is required or in a case where it is determined in step S202 that the setting is "constantly plaintext", the information processing apparatus 100 does not encrypt the data corresponding to the region indicated by the reading request (S206). In this case, the information processing apparatus 100 transmits the data corresponding to the region indicated by the reading request.

Furthermore, in a case where it is determined in step S204 that the encryption is required or in a case where it is determined in step S200 that the setting is "constantly encrypt", the information processing apparatus 100 encrypts the data corresponding to the region indicated by the reading request (S208). In this case, the information processing apparatus 100 transmits the encrypted data.

In a case where the reading request including the information regarding the encryption is received, the information processing apparatus 100 executes, for example, the processing illustrated in Fig. 15. Note that it goes without saying that the processing of the information processing apparatus 100 in a case where the reading request including the information regarding the encryption is received is not limited to the example illustrated in Fig. 15.

### [2-1-3] Operation And Effect of Information Processing System 1000 According to First Embodiment

In a first information processing system 1000, for example, the following operations are realized. Furthermore, by using the first information processing system 1000, for example, the following effects are obtained. Note that it goes without saying that the operations of the information processing system 1000 according to the first embodiment and the effects obtained by using the information processing system according to the first embodiment are not limited to the examples below.
· Reading can be performed without authenticating the authority. In response to the reading request (command), the information processing apparatus 100 replies encrypted data obtained by encrypting data by using a key associated with a region. The encrypted data is decrypted by a device including the key (server 300, reader/writer 200, or the like).
· In a case where the reading request is acquired, the information processing apparatus 100 determines whether or not the information processing apparatus 100 encrypts and replies the data and which key is used to encrypt when the plurality of keys is associated with the region by referring to the setting information that has been set to the region in advance.
· For the region that is set as "may be or not have to be encrypted", whether or not to perform the encryption can be specified according to a parameter of the reading request (example of information regarding encryption). Furthermore, which key is used for the region that is set as "may be or not have to be encrypted" can be specified according to the parameter of the reading request (example of information regarding encryption).
· In a case where a single reading request includes reading of a plurality of regions, the information processing apparatus 100 encrypts the data read from each region by using the key associated with each region.
· To prevent eavesdropping, the reader/writer 200 may encrypt the parameter of the reading request with the key associated with the region as illustrated in Fig. 12.

### [2-2] Information Processing Method According to Second Embodiment

### [2-2-1] Outline of Information Processing System 1000 to Which Information Processing Method According to Second Embodiment Is Applied

For example, by using the first information processing system 1000, the reduction in the processing time regarding reading is realized while ensuring the security regarding the data reading.

However, in the first information processing system 1000, it is not possible for the server 300 to specify when a reading request corresponding to the acquired data is transmitted from the acquired data.

As described above, in a case where it is not possible for the server 300 to specify when the reading request corresponding to the acquired data is transmitted, there is a possibility that undesired events occur as a result of executing some processing on the data obtained by decrypting the acquired data.

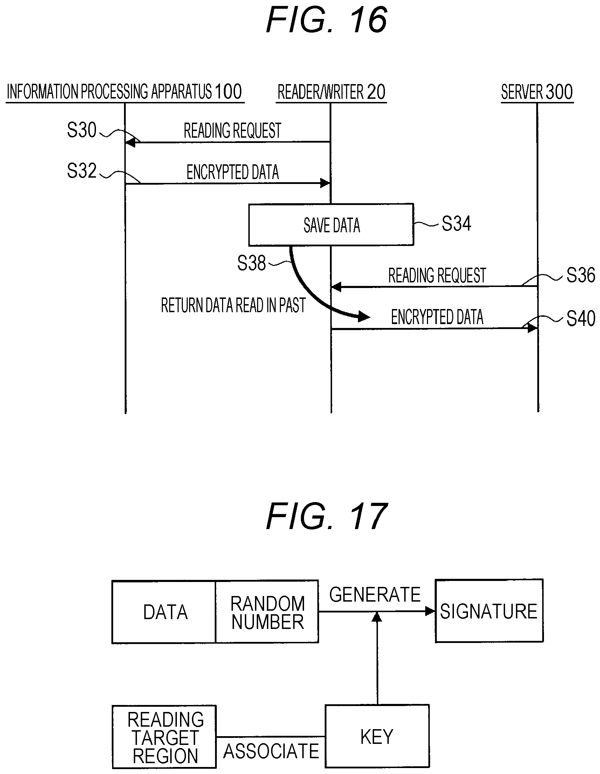

Fig. 16 is an explanatory diagram illustrating an example of a case that may occur in a case where it is not possible for the server 300 to specify when the reading request corresponding to the acquired data is transmitted. Fig. 16 illustrates an example of processing of an information processing system including an information processing apparatus 100, the server 300, and a reader/writer 20. In the example illustrated in Fig. 16, communication using NFC is performed between the information processing apparatus 100 and the reader/writer 20, and network communication is performed between the reader/writer 20 and the server 300.

The reader/writer 20 transmits a reading request as in step S102 in Fig. 11 (S30). The information processing apparatus 100 that has received the reading request transmitted from the reader/writer 20 in step S30 transmits encrypted data as in step S106 in Fig. 11 (S32).

The reader/writer 20 that has received the encrypted data transmitted from the information processing apparatus 100 in step S32 records the received encrypted data in an arbitrary recording medium (S34).

The server 300 transmits the reading request to the reader/writer 20 (S36).

The reader/writer 20 that has received the reading request transmitted from the server 300 in step S36 reads the encrypted data recorded in the recording medium in step S34 (S38) and transmits the read data to the server 300 (S40).

For example, in a case where the processing illustrated in Fig. 16 is executed, the server 300 processes the encrypted data transmitted from the reader/writer 20 in step S40 as the data corresponding to the reading request transmitted in step S36. Therefore, in the example illustrated in Fig. 16, there is a possibility that undesired events occur as a result of executing processing on the acquired data (or data obtained by decrypting acquired encrypted data) by the server 300.

Note that a case that may occur in a case where it is not possible for the server 300 to specify when the reading request corresponding to the data is transmitted is not limited to the example illustrated in Fig. 16. For example, in a case where the information processing system according to the first embodiment has a configuration in which the information processing apparatus 100 and the server 300 directly communicate with each other (including configuration in which server 300 functions as reader/writer 200), there is a possibility that undesirable events similarly occur in a case where a man-in-the-middle attack is performed on the communication between the information processing apparatus 100 and the server 300.

Therefore, in the information processing system 1000 according to the second embodiment, the server 300 transmits the reading request and information indicating a value. "To transmit the reading request and the information indicating the value" according to the present embodiment means "to transmit the reading request including the information indicating the value" or "to transmit the information indicating the value as data different from the reading request". Furthermore, the same applies to a case where the data transmitted together with the reading request is data other than the information indicating the value.

The value indicated by the information indicating the value according to the present embodiment includes a numerical value, a character string, or a combination of these. The value indicated by the information indicating the value is, for example, generated by generating a random number by the server 300 or is specified by reading a value of a counter circuit or a clock included in the server 300 by the server 300. The value indicated by the information indicating the value serves as, for example, a parameter of the reading request. Hereinafter, a case where the value indicated by the information indicating the value according to the present embodiment is a random number will be described as an example.

Note that, in the information processing system 1000 according to the second embodiment, the reader/writer 200 that has received the reading request transmitted from the server 300 may transmit the received reading request and the information indicating the value to the information processing apparatus 100. In this case, the value indicated by the information indicating the value is generated, for example, by generating a random number by the reader/writer 200. Furthermore, the reader/writer 200 transmits the information indicating the value to the server 300.

In a case where the information indicating the value is acquired together with the reading request, the information processing apparatus 100 executes the following processing. Note that the information processing apparatus 100 may execute the following processing in addition to the processing according to the information processing method according to the first embodiment.

The information processing apparatus 100 generates an electronic signature from the data corresponding to the region indicated by the reading request, the value indicated by the information indicating the value, and the encryption key corresponding to the region indicated by the reading request. Then, the information processing apparatus 100 transmits the generated electronic signature together with the data corresponding to the region indicated by the reading request. Here, the data transmitted by the information processing apparatus 100 may be encrypted or may not be encrypted.

Fig. 17 is an explanatory diagram for explaining an example of processing according to an information processing method by the information processing apparatus 100 according to the second embodiment and illustrates an example of generation of the electronic signature. In Fig. 17, the electronic signature is indicated as a "signature" (the same applies to other drawings).

As illustrated in Fig. 17, the information processing apparatus 100 generates an electronic signature by calculating an arbitrary algorithm such as "Sha-256 With RSA Encryption" by using the data corresponding to the region indicated by the reading request, the random number (example of value indicated by information indicating value), and the encryption key corresponding to the region indicated by the reading request.

Note that, in a case where the information processing method according to the second embodiment is combined with an information processing method according to other embodiment to be described later, the information processing apparatus 100 can generate an electronic signature by using still other information. That is, the information processing apparatus 100 according to the second embodiment generates an electronic signature from, at least, the data corresponding to the region indicated by the reading request, the value indicated by the information indicating the value, and the encryption key corresponding to the region indicated by the reading request.

Note that the processing of the information processing apparatus 100 is not limited to the example described above.

For example, in a case where the reading request indicates the plurality of regions, the information processing apparatus 100 generates an electronic signature for each region indicated by the reading request as in the example illustrated in Fig. 17. Then, the information processing apparatus 100 further transmits the generated electronic signature for each region together with the data corresponding to the region indicated by the reading request.

Furthermore, in a case where the reading request indicates the plurality of regions, the information processing apparatus 100 generates an encryption key for signature on the basis of the encryption key corresponding to the plurality of regions indicated by the reading request. The encryption key for signature is generated by, for example, degenerating a plurality of encrypting keys (combining a plurality of encrypting keys).

When the encryption key for signature is generated, the information processing apparatus 100 generates an electronic signature from data corresponding to the plurality of regions indicated by the reading request, the value indicated by the information indicating the value, and the encryption key for signature as in the example illustrated in Fig. 17. Then, the information processing apparatus 100 transmits the generated electronic signature together with the data corresponding to the region indicated by the reading request.

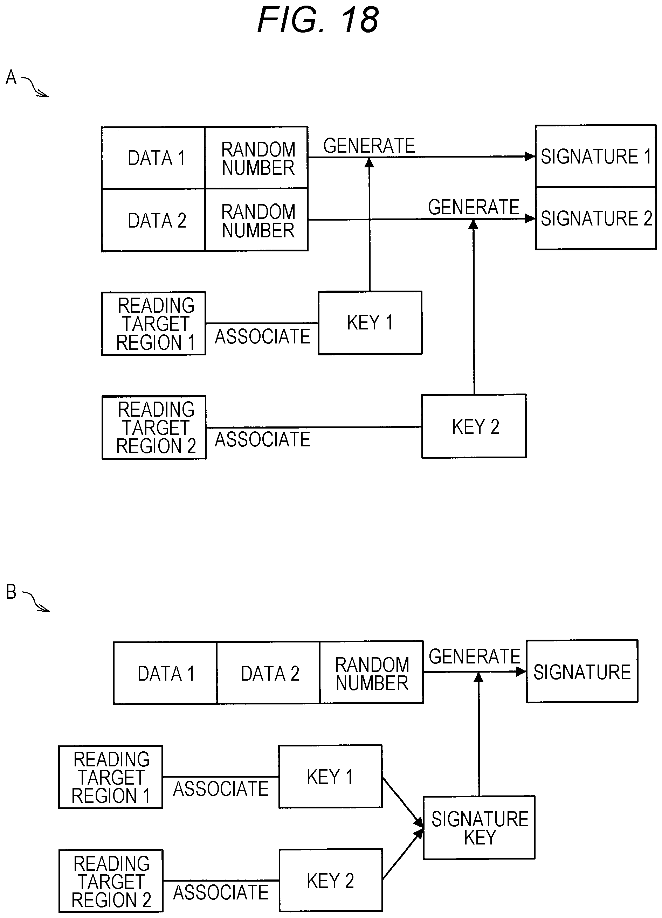

Fig. 18 is an explanatory diagram for explaining an example of the processing according to the information processing method by the information processing apparatus 100 according to the second embodiment and illustrates another example of the generation of the electronic signature. A of Fig. 18 illustrates an example in which an electronic signature is generated for each region indicated by the reading request as in the example illustrated in Fig. 17. B of Fig. 18 illustrates an example in which an electronic signature is generated from the data corresponding to the plurality of regions indicated by the reading request, the value indicated by the information indicating the value, and the encryption key for signature as in the example illustrated in Fig. 17.

Furthermore, in a case where the information indicating the value is acquired together with the reading request when a common key encryption method is used, the information processing apparatus 100 may generate a Message Authentication Code (MAC) on the basis of the information indicating the value and may transmit the generated MAC together with the data corresponding to the region indicated by the reading request. Here, the data transmitted by the information processing apparatus 100 may be encrypted or may not be encrypted. Hereinafter, in other embodiments, the electronic signature can be replaced with the MAC.

The server 300 that has acquired the data and the electronic signature (or MAC, the same applies below) transmitted from the information processing apparatus 100 verifies the acquired electronic signature. Note that the reader/writer 200 may verify the electronic signature. Then, in a case where the verification result indicates that the electronic signature is normal, the server 300 uses the acquired data (or data obtained by decrypting acquired data) for arbitrary processing. Furthermore, in a case where the verification result indicates that the electronic signature is not normal, the server 300 does not use the acquired data (or data obtained by decrypting acquired data) for arbitrary processing. The server 300 compares, for example, the value obtained by decrypting the acquired electronic signature with the value indicated by the information indicating the value transmitted together with the reading request, and in a case where these values coincide with each other, the server 300 determines that the verification has been normally performed.

In the information processing system 1000 according to the second embodiment, as described above, the server 300 can verify the data by using the electronic signature. Therefore, the server 300 can specify, from the acquired data, whether or not the acquired data is the transmitted data corresponding to the reading request.

### [2-2-2] Processing According to Information Processing Method by Information Processing System 1000 According to Second Embodiment

Next, an example of processing according to the information processing method by the information processing system 1000 according to the second embodiment will be described.

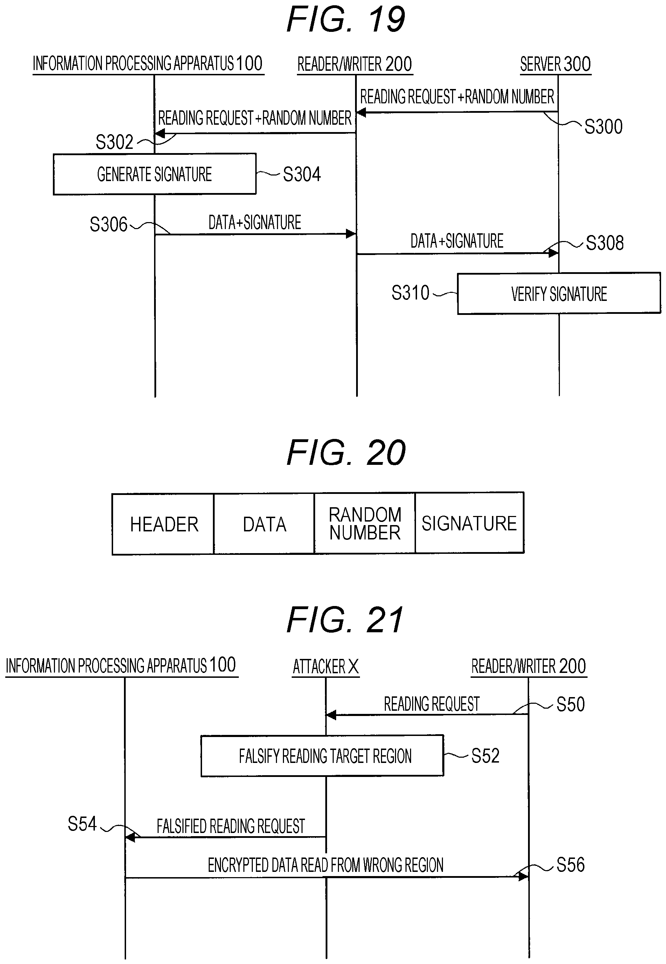

Fig. 19 is an explanatory diagram illustrating an example of processing of the information processing system 1000 according to the second embodiment.

The server 300 transmits the random number (example of information indicating value, the same applies below) together with the reading request (S300).

The reader/writer 200 that has received the reading request and the random number transmitted from the server 300 in step S300 transmits the received reading request and random number to the information processing apparatus 100 (S302). Note that, as in step S102 in Fig. 11, the reader/writer 200 may encrypt the reading request or the reading request and the random number.

The information processing apparatus 100 that has received the reading request and the random number transmitted from the reader/writer 200 in step S302 generates an electronic signature (S304). Then, the information processing apparatus 100 transmits the electronic signature together with the data corresponding to the region indicated by the reading request (S306). Note that, as in step S104 in Fig. 11, the information processing apparatus 100 may encrypt the data corresponding to the region indicated by the reading request by using the encryption key corresponding to the region indicated by the reading request.

Fig. 20 is an explanatory diagram for explaining an example of processing of the information processing system 1000 according to the second embodiment and illustrates an example of the data transmitted by the information processing apparatus 100 in step S306 in Fig. 19.

For example, as illustrated in Fig. 20, the information processing apparatus 100 transmits the data corresponding to the region indicated by the reading request and the electronic signature as a single piece of data. Note that the information processing apparatus 100 may transmit the data corresponding to the region indicated by the reading request and the electronic signature as different pieces of data.

With reference to Fig. 19 again, an example of the processing of the information processing system 1000 according to the second embodiment will be described. The reader/writer 200 that has received the data transmitted from the information processing apparatus 100 in step S306 (for example, data corresponding to region indicated by reading request and data including electronic signature as illustrated in Fig. 20) transmits the received data to the server 300 (S308).

The server 300 that has received the data transmitted from the reader/writer 200 in step S308 (for example, data corresponding to region indicated by reading request and data including electronic signature as illustrated in Fig. 20) verifies the electronic signature (S310).

Then, in a case where the verification result indicates that the electronic signature is normal, the server 300 uses the acquired data (or data obtained by decrypting acquired data) for arbitrary processing. Furthermore, in a case where the verification result indicates that the electronic signature is not normal, the server 300 does not use the acquired data (or data obtained by decrypting acquired data) for arbitrary processing.

In the information processing system 1000 according to the second embodiment, for example, by executing the processing illustrated in Fig. 19, the server 300 can specify, from the acquired data, whether or not the acquired data is the data corresponding to the transmitted reading request.

Furthermore, the information processing system 1000 according to the second embodiment may further execute the processing similar to that of the information processing system 1000 according to the first embodiment. Therefore, the information processing system 1000 according to the second embodiment can obtain the effects obtained by the information processing system 1000 according to the first embodiment.

### [2-2-3] Operation And Effect of Information Processing System 1000 According to Second Embodiment

In a second information processing system 1000, for example, the following operations are realized. Furthermore, by using the second information processing system 1000, for example, the following effects are obtained. Note that it goes without saying that the operations of the information processing system 1000 according to the second embodiment and the effects obtained by using the information processing system according to the second embodiment are not limited to the examples below.

A value generated by the server 300 (for example, random number) is transferred to the information processing apparatus 100 as a parameter of the reading request. Furthermore, as the parameter of the reading request, the value generated by the reader/writer 200 (for example, random number) may be transferred to the information processing apparatus 100.

The information processing apparatus 100 generates an electronic signature (MAC in a case where common key encryption method is used) with respect to data to be read (data before being encrypted or encrypted data) and a random number and transmits the electronic signature together with the data to the reader/writer 200.

The information processing apparatus 100 generates the electronic signature by using a key associated with a region, for example.

The server 300 (or reader/writer 200) can determine whether or not the data is the data that is read at this time by verifying the electronic signature and can detect falsification of the read data.

### [2-3] Information Processing Method According to Third Embodiment

### [2-3-1] Outline of Information Processing System 1000 to Which Information Processing Method According to Third Embodiment Is Applied

For example, in the information processing system 1000 having the configuration illustrated in Fig. 1, there is a possibility that the communication from the reader/writer 200 to the information processing apparatus 100 is falsified by using a method such as a man-in-the-middle attack. An example of the falsification includes that a reading target region indicated by information indicating a region included in a reading request is rewritten.

Fig. 21 is an explanatory diagram illustrating an example of a case where the communication from the reader/writer 200 to the information processing apparatus 100 is falsified. In Fig. 21, a device that falsifies the communication from the reader/writer 200 to the information processing apparatus 100 by the man-in-the-middle attack or the like is illustrated as an "attacker X".

The reader/writer 200 transmits a reading request to the information processing apparatus 100 as in step S102 illustrated in Fig. 11 (S50).

The attacker X that has received the reading request transmitted from the reader/writer 200 in step S50 falsifies a reading target region indicated by information indicating a region included in the reading request (S52). Then, the attacker X transmits the falsified reading request to the information processing apparatus 100 (S54).

The information processing apparatus 100 that has received the reading request transmitted from the attacker X in step S54 encrypts data corresponding to the region indicated by the reading request and transmits the encrypted data respectively as in steps S104 and S106 illustrated in Fig. 11 (S56).

For example, in the example illustrated in Fig. 21, the information processing apparatus 100 transmits data read from a region different from the region indicated by the reading request transmitted from the reader/writer 200 in step S50 (data read from wrong region).

Therefore, in the information processing system 1000 according to the third embodiment, the information processing apparatus 100 generates an electronic signature from the data corresponding to the region indicated by the reading request, information included in the reading request, and an encryption key corresponding to the region indicated by the reading request. As the information included in the reading request according to the present embodiment, for example, a parameter of the reading request such as information indicating the region is exemplified. Then, the information processing apparatus 100 transmits the generated electronic signature together with the data corresponding to the region indicated by the reading request. Here, the data transmitted by the information processing apparatus 100 may be encrypted or may not be encrypted.

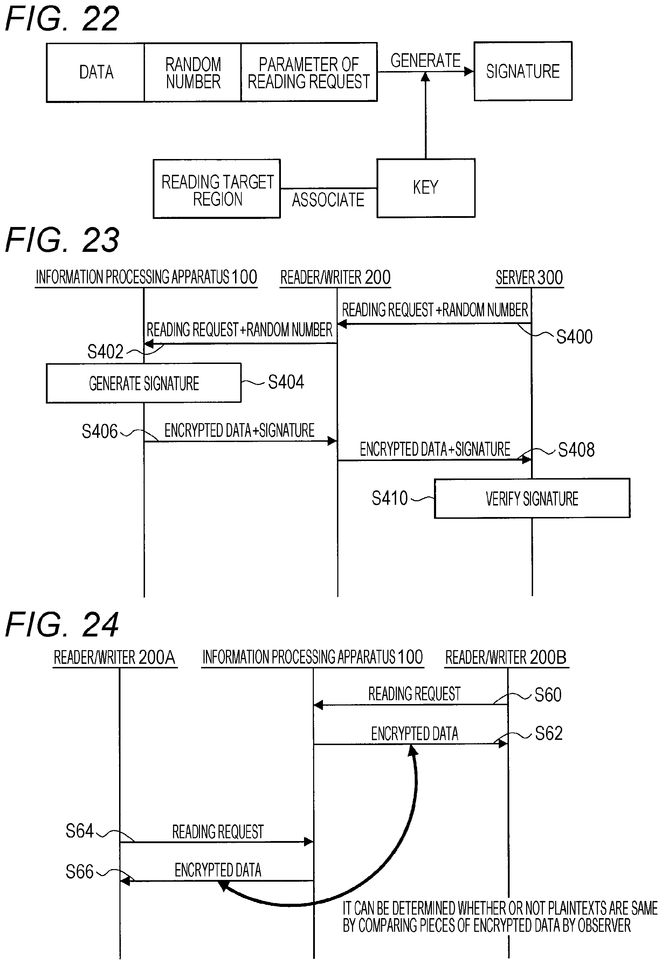

Fig. 22 is an explanatory diagram for explaining an example of processing according to an information processing method by the information processing apparatus 100 according to the third embodiment and illustrates an example of generation of the electronic signature. The example of the generation of the electronic signature illustrated in Fig. 22 is an example of generation of an electronic signature in a case where the information processing method according to the second embodiment and the information processing method according to the third embodiment are combined.

As illustrated in Fig. 22, the information processing apparatus 100 generates the electronic signature by calculating an arbitrary algorithm by using, for example, the data corresponding to the region indicated by the reading request, a random number (example of value indicated by information indicating value), a parameter of the reading request (information included in reading request), and the encryption key corresponding to the region indicated by the reading request.

Note that, in a case where the electronic signature is generated by only the information processing method according to the third embodiment, it is not necessary for the information processing apparatus 100 to generate the electronic signature by using the random number illustrated in Fig. 22. That is, the information processing apparatus 100 according to the third embodiment generates the electronic signature from, at least, the data corresponding to the region indicated by the reading request, the information included in the reading request, and the encryption key corresponding to the region indicated by the reading request.

Note that the processing of the information processing apparatus 100 is not limited to the example described above.

For example, in a case where the information indicating the value is acquired together with the reading request when a common key encryption method is used, the information processing apparatus 100 may generate a MAC on the basis of the parameter of the reading request (information included in reading request) and may transmit the generated MAC together with the data corresponding to the region indicated by the reading request. Here, the data transmitted by the information processing apparatus 100 may be encrypted or may not be encrypted.

The server 300 that has acquired the data and the electronic signature (or MAC) transmitted from the information processing apparatus 100 verifies the acquired electronic signature. Note that the reader/writer 200 may verify the electronic signature. By verifying the electronic signature, the information processing system 1000 according to the third embodiment can confirm whether or not the reading request is falsified.

Furthermore, in the information processing system 1000 according to the third embodiment, processing similar to that of one of or both of the information processing system 1000 according to the first embodiment and the information processing system 1000 according to the second embodiment may be further executed. Therefore, the information processing system 1000 according to the third embodiment can obtain the effects obtained by one or both of the information processing system 1000 according to the first embodiment and the information processing system 1000 according to the second embodiment.

### [2-3-2] Processing According to Information Processing Method by Information Processing System 1000 According to Third Embodiment

Next, an example of processing according to the information processing method by the information processing system 1000 according to the third embodiment will be described.

Fig. 23 is an explanatory diagram illustrating an example of processing of the information processing system 1000 according to the third embodiment. Fig. 23 illustrates an example of processing in a case where the information processing method according to the first embodiment to the information processing method according to the third embodiment are combined.

The server 300 transmits the random number together with the reading request as in step S300 in Fig. 19 (S400). Note that, in a case where the processing according to the information processing method according to the second embodiment is not executed, it is not necessary for the server 300 to transmit the random number.

The reader/writer 200 that has received the reading request and the random number transmitted from the server 300 in step S400 transmits the received reading request and random number to the information processing apparatus 100 as in step S300 in Fig. 19 (S402).

The information processing apparatus 100 that has received the reading request and the random number transmitted from the reader/writer 200 in step S402 generates an electronic signature as in Fig. 22 (S404). Then, the information processing apparatus 100 transmits the electronic signature together with the data corresponding to the region indicated by the reading request (S406) .

The reader/writer 200 that has received the data transmitted from the information processing apparatus 100 in step S406 transmits the received data to the server 300 (S408).

The server 300 that has received the data transmitted from the reader/writer 200 in step S408 verifies the electronic signature (S410).

Then, in a case where the verification result indicates that the electronic signature is normal, the server 300 determines that the reading request is not falsified. Then, the server 300 decrypts the encrypted data that has been acquired and uses the decrypted data for arbitrary processing.

Furthermore, in a case where the verification result indicates that the electronic signature is not normal, the server 300 determines that the reading request is falsified, and does not process the encrypted data that has been acquired.

In the information processing system 1000 according to the third embodiment, for example, by executing the processing illustrated in Fig. 23, the server 300 can confirm whether or not the reading request is falsified.

### [2-3-3] Operation And Effect of Information Processing System 1000 According to Third Embodiment

In a third information processing system 1000, for example, the following operations are realized. Furthermore, by using the third information processing system 1000, for example, the following effects are obtained. Note that it goes without saying that the operations of the information processing system 1000 according to the third embodiment and the effects obtained by using the information processing system according to the third embodiment are not limited to the examples below.

In response to the reading request, the information processing apparatus 100 generates an electronic signature (MAC in a case where common key encryption method is used) with respect to data to be read (data before being encrypted or encrypted data) and a parameter of the reading request (for example, specification of reading destination) and transmits the electronic signature to the reader/writer 200 together with the data.

The information processing apparatus 100 generates the electronic signature by using a key associated with a region, for example.

By verifying the electronic signature, the server 300 (or reader/writer 200) can confirm that the parameter of the reading request is not falsified.

### [2-4] Information Processing Method According to Fourth Embodiment

### [2-4-1] Outline of Information Processing System 1000 to Which Information Processing Method According to Fourth Embodiment Is Applied

For example, with the information processing system 1000 having the configuration illustrated in Fig. 1, there is a possibility that, by observing the encrypted data transmitted from the information processing apparatus 100 to the reader/writer 200 by a third party, the third party can determine whether or not the encrypted data is the same, even though content of the data is unknown.

Fig. 24 is an explanatory diagram illustrating an example of a case where the encrypted data transmitted from the information processing apparatus 100 to the reader/writer 200 is observed by a third party. Fig. 24 illustrates reader/writers 200A and 200B having functions similar to that of the reader/writer 200 illustrated in Fig. 1.

The reader/writer 200A transmits a reading request to the information processing apparatus 100 as in step S102 illustrated in Fig. 11 (S60).

The information processing apparatus 100 that has received the reading request transmitted from the reader/writer 200A in step S60 encrypts data corresponding to a region indicated by the reading request and transmits the encrypted data respectively as in steps S104 and S106 illustrated in Fig. 11 (S62).

The reader/writer 200B transmits a reading request to the information processing apparatus 100 as in step S102 illustrated in Fig. 11 (S64).

The information processing apparatus 100 that has received the reading request transmitted from the reader/writer 200B in step S64 encrypts data corresponding to a region indicated by the reading request and transmits the encrypted data respectively as in steps S104 and S106 illustrated in Fig. 11 (S66).

For example, in the example illustrated in Fig. 24, an observer can determine whether or not the pieces of data before being encrypted (plaintext) are the same by comparing the encrypted data transmitted in step S62 with the encrypted data transmitted in step S66.

Therefore, in the information processing system 1000 according to the fourth embodiment, the information processing apparatus 100 generates an encryption key corresponding to the reading request, for example, for each acquired reading request. The information processing apparatus 100 generates the encryption key corresponding to the reading request on the basis of an encryption key corresponding to a region indicated by the acquired reading request and a value corresponding to a reading request different for each acquired reading request. The encryption key corresponding to the reading request is generated by calculating an arbitrary encryption key generation algorithm by using the encryption key corresponding to the region indicated by the reading request and the value corresponding to the reading request.

For example, the value corresponding to the reading request according to the present embodiment is generated by generating a random number by the information processing apparatus 100 or is specified by reading a value of a counter circuit included in the information processing apparatus 100 by the information processing apparatus 100.

Hereinafter, in order to distinguish the encryption key corresponding to the reading request from the encryption key corresponding to the region indicated by the reading request, there is a case where the encryption key corresponding to the reading request is indicated as an "encrypting key".

The encrypting key becomes an encryption key different for each reading request by generating the encrypting key (encryption key corresponding to reading request) by using the encryption key corresponding to the region indicated by the reading request and the value corresponding to the reading request different for each reading request.

Therefore, even if the pieces of data before being encrypted are the same, the data encrypted on the basis of the reading request is different for each reading request acquired by the information processing apparatus 100.

Furthermore, the information processing apparatus 100 may use the generated encrypting key as an encryption key for signature used to generate the electronic signature by using the information processing method according to the present embodiment.

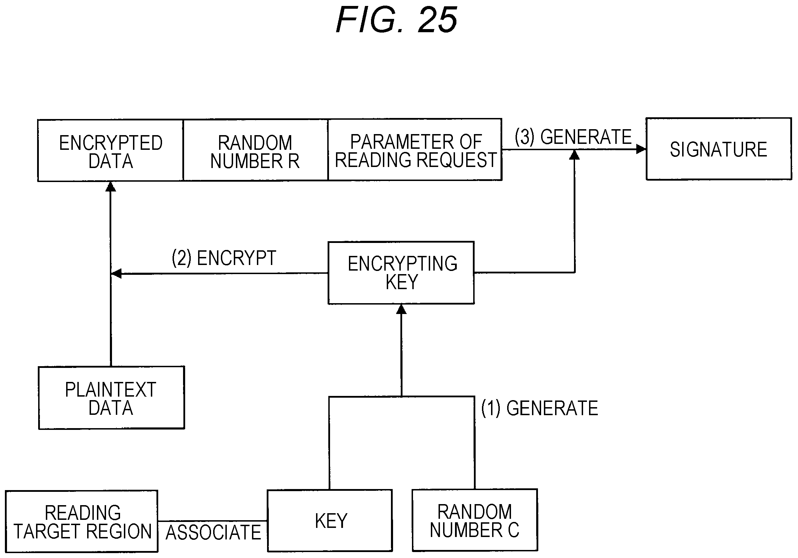

Fig. 25 is an explanatory diagram for explaining an example of processing according to an information processing method by the information processing apparatus 100 according to the fourth embodiment and illustrates an example of an encrypting key (encryption key corresponding to reading request).

Furthermore, Fig. 25 illustrates an example in which an encrypting key is also used as an encryption key for signature. As in Fig. 22, the example of generation of the electronic signature illustrated in Fig. 25 is an example of generation of an electronic signature in a case where the information processing method according to the second embodiment and the information processing method according to the third embodiment are combined.

As illustrated in Fig. 25, the information processing apparatus 100 generates an encrypting key, for example, from the encryption key corresponding to the region indicated by the reading request and a random number C (example of value corresponding to reading request). Then, the information processing apparatus 100 encrypts plaintext data (data corresponding to region indicated by reading request) by using the generated encrypting key. Furthermore, the information processing apparatus 100 generates the electronic signature as in Fig. 22 by using the generated encrypting key instead of the encryption key corresponding to the region indicated by the reading request.

The information processing apparatus 100 transmits a value corresponding to the reading request used to generate the encrypting key together with the data encrypted by using the generated encrypting key. Furthermore, in a case where the electronic signature is generated as illustrated in Fig. 25, the information processing apparatus 100 may further transmit the generated electronic signature.

"The information processing apparatus 100 transmits the value corresponding to the reading request used to generate the encrypting key together with the data encrypted by using the encrypting key" so that a device such as the server 300 that has a valid encryption key can decrypt the encrypted data.

Note that the processing of the information processing apparatus 100 is not limited to the example described above.

For example, the information processing apparatus 100 specifies whether or not to generate the encryption key corresponding to the region indicated by the reading request and the encrypting key (encryption key corresponding to reading request) on the basis of setting information associated with a region of a recording medium.

Whether or not to generate the encrypting key is specified, for example, by referring to encrypting key generation necessity information included in the setting information.

For example, in a case where the encrypting key generation necessity information indicates "to constantly generate "the encryption key corresponding to the reading request", the information processing apparatus 100 generates the encrypting key and encrypts the data corresponding to the region indicated by the reading request as illustrated in Fig. 25. Furthermore, for example, in a case where the encrypting key generation necessity information indicates "not to constantly generate "the encryption key corresponding to the reading request", the information processing apparatus 100 encrypts the data corresponding to the region indicated by the reading request by using the encryption key corresponding to the region indicated by the reading request.

Furthermore, for example, in a case where the encrypting key generation necessity information indicates "to follow the reading request", the information processing apparatus 100 selectively generates the encrypting key according to data (example of information regarding encryption) indicating whether or not to generate "the encryption key corresponding to the reading request" included in the reading request. In this case, the information processing apparatus 100 encrypts the data corresponding to the region indicated by the reading request by using the encryption key corresponding to the region indicated by the reading request or the generated encrypting key.

As described above, in the information processing system 1000 according to the fourth embodiment, the information processing apparatus 100 encrypts the data by using the encrypting key so that the data encrypted on the basis of the reading request is different for each reading request acquired by the information processing apparatus 100 even if the pieces of data before being encrypted are the same.

Therefore, the information processing system 1000 according to the fourth embodiment prevents that "the third party can determine whether or not the encrypted data is the same data".

Furthermore, in the information processing system 1000 according to the fourth embodiment, processing similar to those of one or more of the information processing system 1000 according to the first embodiment to the information processing system 1000 according to the third embodiment may be further executed. Therefore, the information processing system 1000 according to the fourth embodiment can obtain the effects obtained by one or more of the information processing system 1000 according to the first embodiment to the information processing system 1000 according to the third embodiment.

### [2-4-2] Processing According to Information Processing Method by Information Processing System 1000 According to Fourth Embodiment

Next, an example of processing according to the information processing method of the information processing system 1000 according to the fourth embodiment will be described.

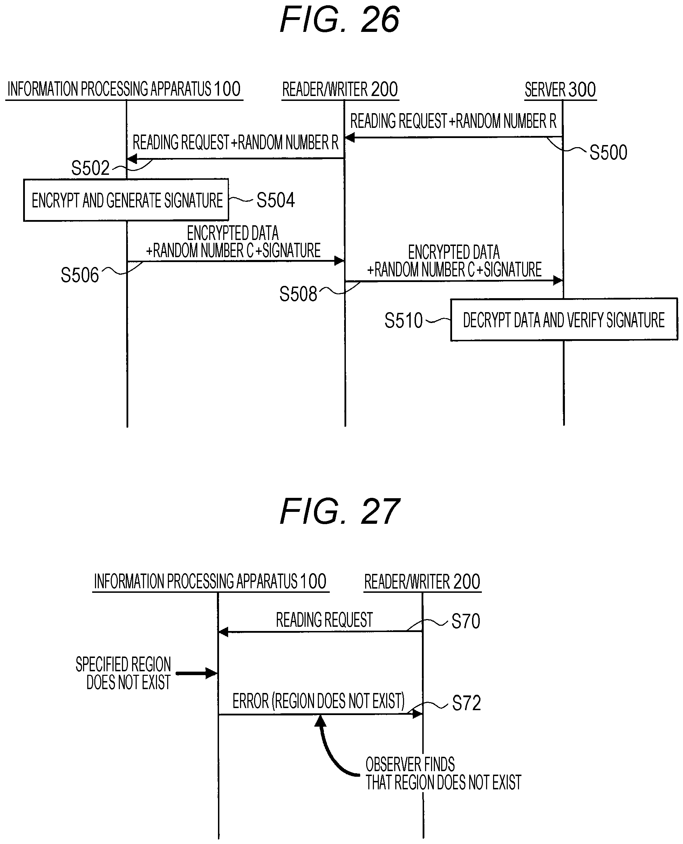

Fig. 26 is an explanatory diagram illustrating an example of the processing of the information processing system 1000 according to the fourth embodiment. Fig. 26 illustrates an example of processing in a case where the information processing method according to the first embodiment to the information processing method according to the third embodiment are combined.

The server 300 transmits a random number R together with the reading request as in step S300 in Fig. 19 (S500). Note that, in a case where the processing according to the information processing method according to the second embodiment is not executed, it is not necessary for the server 300 to transmit the random number.

The reader/writer 200 that has received the reading request and the random number R transmitted from the server 300 in step S500 transmits the received reading request and random number R to the information processing apparatus 100 as in step S300 in Fig. 19 (S502).

The information processing apparatus 100 that has received the reading request and the random number R transmitted from the reader/writer 200 in step S502 encrypts the data corresponding to the region indicated by the reading request and generates an electronic signature as in Fig. 25 (S504). Then, the information processing apparatus 100 transmits a random number C (example of value corresponding to reading request) and the electronic signature together with the encrypted data (S506).

The reader/writer 200 that has received the data transmitted from the information processing apparatus 100 in step S506 transmits the received data to the server 300 (S508).

The server 300 that has received the data transmitted from the reader/writer 200 in step S508 decrypts the encrypted data and verifies the electronic signature (S510).

Then, in a case where the verification result indicates that the electronic signature is normal, the server 300 uses the decrypted data for arbitrary processing. Furthermore, in a case where the verification result indicates that the electronic signature is not normal, the server 300 does not use the decrypted data for arbitrary processing.

In the information processing system 1000 according to the fourth embodiment, for example, "the third party can determine whether or not the encrypted data is the same data" is prevented by executing the processing illustrated in Fig. 26.

### [2-4-3] Operation And Effect of Information Processing System 1000 According to Fourth Embodiment

In a fourth information processing system 1000, for example, the following operations are realized. Furthermore, by using the fourth information processing system 1000, for example, the following effects are obtained. Note that it goes without saying that the operations of the information processing system 1000 according to the fourth embodiment and the effects obtained by using the information processing system according to the fourth embodiment are not limited to the examples below.

The information processing apparatus 100 generates a value (random number, counter value held in information processing apparatus 100, or the like) different for each reading request.

When encrypting data to be read, the information processing apparatus 100 encrypts the data by using an encrypting key generated from the value different for each reading request.

The information processing apparatus 100 transmits the value different for each reading request to the reader/writer 200 together with the encrypted data.

On the basis of the setting information that has been set to a region in advance, the information processing apparatus 100 determines whether or not to generate the encrypting key from the value different for each reading request and which key is used to generate the encrypting key when a plurality of keys is associated with the region.

For the region that is set as "do not need to generate the encrypting key", whether or not generate the encrypting key can be specified according to the parameter of the reading request (example of information regarding encryption). Furthermore, which key is used to the region that is set as "do not need to generate the encrypting key" can be specified according to the parameter of the reading request (example of information regarding encryption).

### [2-5] Information Processing Method According to Fifth Embodiment

### [2-5-1] Outline of Information Processing System 1000 to Which Information Processing Method According to Fifth Embodiment Is Applied

For example, with the information processing system 1000 having the configuration illustrated in Fig. 1, in a case where the information processing apparatus 100 transmits error information indicating an error when the information processing apparatus 100 fails to read the data in response to the reading request, there is a possibility that a third party can determine that an error occurs by observing the data transmitted from the information processing apparatus 100 to the reader/writer 200 by the third party. For example, in a case where a data length of the error information is determined depending on a standard or the like, there is a possibility that the third party can determine that an error occurs regardless of whether or not the data is encrypted according to a data length of the data transmitted from the information processing apparatus 100 to the reader/writer 200.

Fig. 27 is an explanatory diagram illustrating an example of a case where a third party observes the data transmitted from the information processing apparatus 100 to the reader/writer 200 and it is determined that an error occurs.

The reader/writer 200 transmits a reading request to the information processing apparatus 100 as in step S102 illustrated in Fig. 11 (S70).

The information processing apparatus 100 that has received the reading request transmitted from the reader/writer 200 in step S70 transmits the error information in a case where a region indicated by the reading request does not exist (S72).

For example, in the example illustrated in Fig. 27, there is a possibility that the observer can determine that an error occurs regardless of whether or not the data is encrypted according to the data length of the data transmitted in step S72. Furthermore, in the example illustrated Fig. 27, there is a possibility that the observer specifies a cause of the error, for example, because the region indicated by the reading request does not exist.

Therefore, in the information processing system 1000 according to the fifth embodiment, for example, in a case where it is not possible to read data from the region indicated by the reading request, the information processing apparatus 100 encrypts the error information and dummy data by using a predetermined encryption key.

As the dummy data according to the present embodiment, for example, random number data, data of all zeros, or the like are exemplified. For example, in a case where a data length when the data is normally read in response to the reading request is determined depending on the standard or the like, a data length of the dummy data may be a "data length obtained by subtracting the data length of the error information from the determined data length".

As the predetermined encryption key according to the fifth embodiment, for example, an encryption key corresponding to the region indicated by the reading request or an encrypting key indicated in the fourth embodiment (encryption key corresponding to reading request) is exemplified.

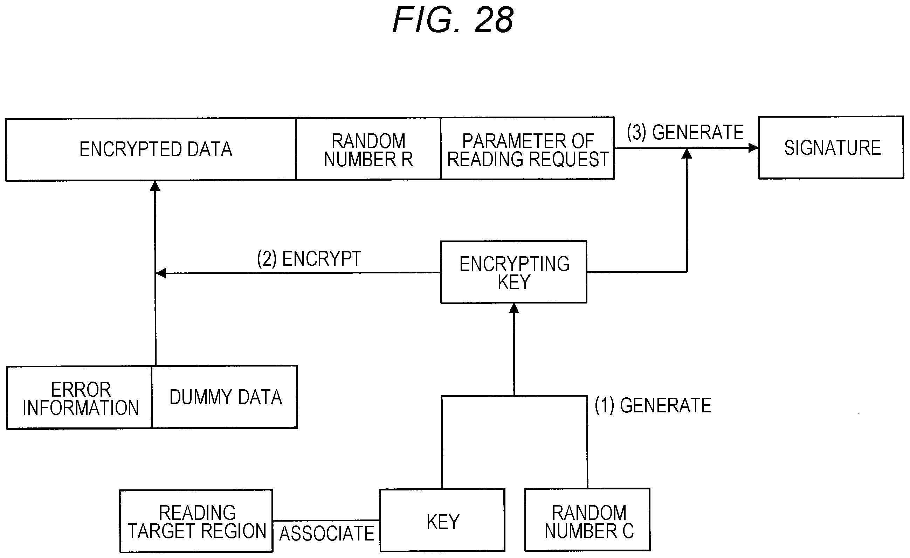

Fig. 28 is an explanatory diagram for explaining an example of processing according to an information processing method by the information processing apparatus 100 according to the fifth embodiment. Fig. 28 illustrates an example in which the error information and the dummy data are encrypted by using an encrypting key (encryption key corresponding to reading request). Furthermore, Fig. 28 illustrates an example in which the encrypting key is also used as an encryption key for signature as in Fig. 25.

As illustrated in Fig. 28, the information processing apparatus 100 generates an encrypting key from the encryption key corresponding to the region indicated by the reading request and a random number C (example of value corresponding to reading request) as in Fig. 25. Then, the information processing apparatus 100 encrypts the error information and the dummy data by using the generated encrypting key. Furthermore, the information processing apparatus 100 generates an electronic signature as in Fig. 25.

When the error information and the dummy data are encrypted, the information processing apparatus 100 transmits the encrypted data. That is, the encrypted data transmitted by the information processing apparatus 100 is different from data obtained by simply encrypting the error information.

Therefore, in the information processing system 1000 according to the fifth embodiment, even in a case where a third party observes the data transmitted from the information processing apparatus 100 to the reader/writer 200, it is difficult for the third party to determine that an error occurs.

### [2-5-2] Processing According to Information Processing Method by Information Processing System 1000 According to Fifth Embodiment

Next, an example of processing according to the information processing method by the information processing system 1000 according to the fifth embodiment will be described.

The information processing system 1000 according to the fifth embodiment can basically execute processing similar to the processing illustrated in Fig. 11 (processing according to information processing method by information processing system 1000 according to first embodiment), the processing illustrated in Fig. 19 (processing according to information processing method by information processing system 1000 according to second embodiment), the processing illustrated in Fig. 23 (processing according to information processing method by information processing system 1000 according to third embodiment), and the processing illustrated in Fig. 26 (processing according to information processing method by information processing system 1000 according to fourth embodiment). A difference from these processing is that the information processing apparatus 100 according to the fifth embodiment "encrypts the error information and the dummy data by using the predetermined encryption key and transmits the encrypted data in a case where it is not possible to read the data from the region indicated by the reading request".

### [2-5-3] Operation And Effect of Information Processing System 1000 According to Fifth Embodiment

In a fifth information processing system 1000, for example, the following operations are realized. Furthermore, by using the fifth information processing system 1000, for example, the following effects are obtained. Note that it goes without saying that the operations of the information processing system 1000 according to the fifth embodiment and the effects obtained by using the information processing system according to the fifth embodiment are not limited to the examples below.

In a case where an error occurs, the information processing apparatus 100 transmits the error information and the dummy data (for example, random number data and data of all zeros) to the reader/writer 200. The information processing apparatus 100 encrypts the dummy data and the error information.

### [2-6] Information Processing Method According to Sixth Embodiment

### [2-6-1] Outline of Information Processing System 1000 to Which Information Processing Method According to Sixth Embodiment Is Applied

For example, in a case where identification information such as an ID is stored in an information processing apparatus 100, an external device of the information processing apparatus 100 such as a server 300 and a reader/writer 200 can execute various processing by using the identification information stored in the information processing apparatus 100.

Here, when a use case is assumed in which the identification information stored in the information processing apparatus 100 is used by a plurality of business operators, there is the following concern.

In a case where a certain business operator associates the identification information with important information, there is a possibility that another business operator can reach the important information from the read identification information. For example, it is considered that "a national code (example of identification information) read from a reader/writer of a general shop is transmitted to a person who has access authority to a national code database so that tax payment information (example of important information) associated with the national code is referred".

In a case where the identification information can be read with no authentication, there is a possibility that a third party can reach the important information from the identification information.

In a case where the identification information can be read only after the authentication, an encryption key for authentication used to read the identification information is used by the plurality of business operators. This increases a risk of leaking of the encryption key for authentication.

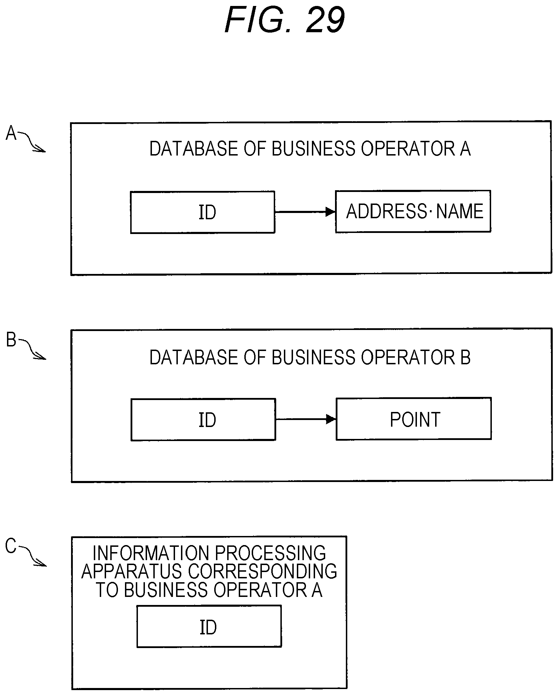

Fig. 29 is an explanatory diagram illustrating an example of a case where identification information stored in the information processing apparatus is used by a plurality of business operators. Fig. 29 illustrates an ID as the identification information.

As illustrated in Fig. 29, there may be a case where the ID stored in the information processing apparatus is managed by a database managed by the plurality of business operators. As illustrated in Fig. 29, in a case where a business operator A makes a business operator B use the ID stored in the information processing apparatus, there is a risk as a concern described above.

Therefore, in the information processing system 1000 according to the sixth embodiment, the information processing apparatus 100 transmits data corresponding to a region indicated by a reading request by executing the processing according to the information processing method according to the first embodiment to the processing according to the information processing method according to the fifth embodiment.

Furthermore, in the information processing system 1000 according to the sixth embodiment, in a case where data acquired from the information processing apparatus 100 includes first identification information, the server 300 converts the first identification information into second identification information that is different from the first identification information.

As the first identification information, for example, an arbitrary ID such as an ID of the information processing apparatus 100 or an ID of a service is exemplified. Furthermore, as the second identification information, an arbitrary ID different from the first identification information such as an ID of a service different from the service corresponding to the first identification information is exemplified.

The server 300 converts the first identification information into the second identification information, for example, by referring to "a table (or database) in which the first identification information, the second identification information, and conversion destination specification information are associated with each other". With the table, data (for example, data indicating Internet Protocol (IP) address, mail address, or the like) indicating a transmission destination to which the second identification information is transmitted may be further associated. Hereinafter, the table is referred to as a "conversion table".

Here, the conversion destination specification information is data used to uniquely specify the second identification information associated with the first identification information. As the conversion destination specification information, for example, arbitrary data from which a target to which the second identification information is provided (business operator or the like) can be specified such as an ID of a reader/writer (example of relay device) that relays data transmitted from the information processing apparatus 100, an ID of a device that requires the server 300 to transmit the reading request, or the like is exemplified.

Note that the server 300 may convert the first identification information into the second identification information by executing arbitrary algorithm processing that can convert the first identification information into the second identification information.

When the first identification information is converted into the second identification information, the server 300 transmits the second identification information to an external device corresponding to the second identification information.

In the information processing system 1000 according to the sixth embodiment, the server 300 converts the first identification information into the second identification information and transmits the second identification information to the external device corresponding to the second identification information.

Therefore, the information processing system 1000 according to the sixth embodiment realizes that "each business operator provides the service based on the identification information without sharing the identification information stored in the information processing apparatus 100 by the plurality of business operators". That is, the information processing system 1000 according to the sixth embodiment does not cause the concern described above.

### [2-6-2] Processing According to Information Processing Method by Information Processing System 1000 According to Sixth Embodiment

Next, an example of processing according to the information processing method by the information processing system 1000 according to the sixth embodiment will be described.

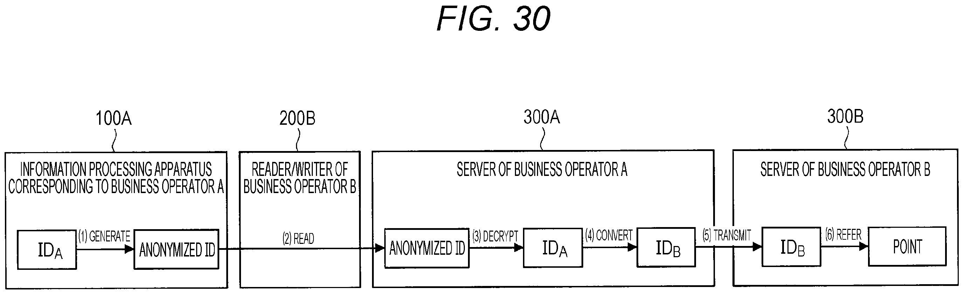

Fig. 30 is an explanatory diagram illustrating an example of a use case to which the information processing system 1000 according to the sixth embodiment is applied. In Fig. 30, the information processing apparatus 100 corresponding to the business operator A is referred to as "an information processing apparatus 100A". Furthermore, in Fig. 30, the reader/writer 200 corresponding to the business operator B is referred to as "a reader/writer 200B". Furthermore, in Fig. 30, the server 300 corresponding to the business operator A is referred to as "a server 300A", and the server 300 corresponding to the business operator B is referred to as "a server 300B".

In a case where data corresponding to the region indicated by the reading request is an ID_{A} (example of first identification information), the information processing apparatus 100A encrypts the ID_{A}. Hereinafter, the encrypted ID is referred to as "an anonymized ID". As the anonymized ID, for example, a value generated by a reversible operation from a secret key value is exemplified.

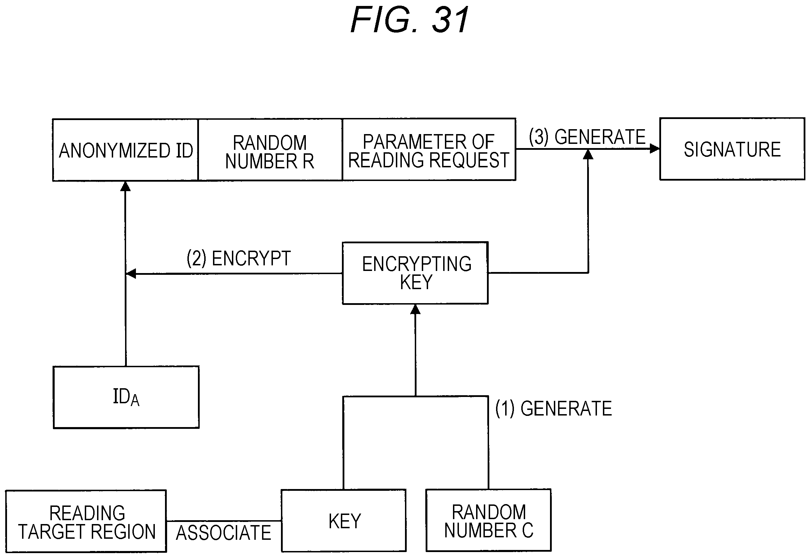

Fig. 31 is an explanatory diagram for explaining an example of processing according to the information processing method by the information processing apparatus 100A according to the sixth embodiment. Fig. 31 illustrates "an example in which the information processing apparatus 100A encrypts the ID_{A} and generates an electronic signature as in Fig. 25".

The information processing apparatus 100A transmits data including the anonymized ID to the reader/writer 200.

The reader/writer 200B that has received the data including the anonymized ID transmits the received data including the anonymized ID to the server 300A. A transmission destination to which the reader/writer 200B transmits the data may be set in advance or may be determined according to the data included in the reading request or the like.

The server 300A that has received the data including the anonymized ID decrypts the anonymized ID and acquires the ID_{A}. When the ID_{A} is acquired, the server 300A converts the ID_{A} into an ID_{B} (second identification information).

Then, the server 300A transmits the ID_{B} to the server 300B. The server 300A specifies a transmission destination to which the ID_{B} is transmitted, for example, by referring to data indicating a transmission destination recorded in the conversion table.

The server 300B that has received the ID_{B} specifies a point associated with the received ID_{B} (example of data associated with second identification information) and uses the specified point for arbitrary processing.

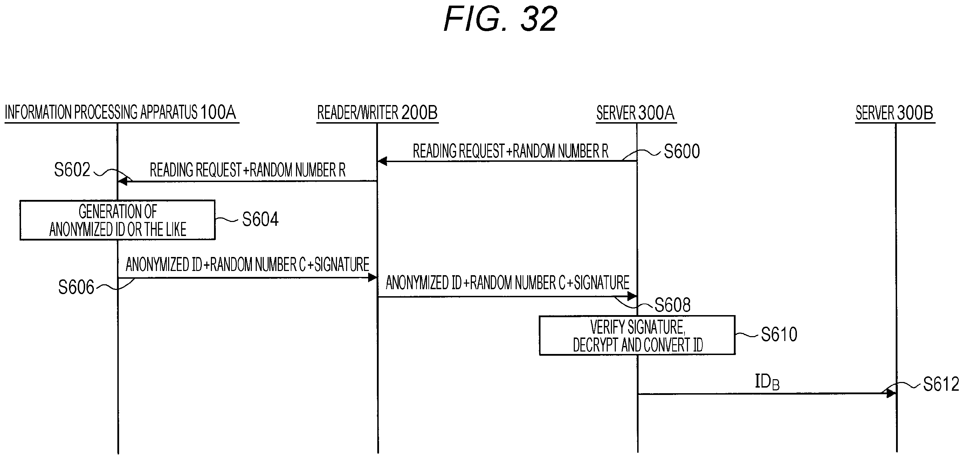

Fig. 32 is an explanatory diagram illustrating an example of processing of the information processing system 1000 according to the sixth embodiment and illustrates an example of processing corresponding to the use case illustrated in Fig. 30. Fig. 32 illustrates an example of processing in a case where the information processing method according to the first embodiment to the information processing method according to the third embodiment are combined as in Fig. 26. Furthermore, in Fig. 32, it is assumed that the reading request be a reading request for reading the ID_{A}.

The server 300A transmits a random number R together with the reading request as in step S300 in Fig. 19 (S600).

The reader/writer 200B that has received the reading request and the random number R transmitted from the server 300A in step S600 transmits the received reading request and random number R to the information processing apparatus 100A as in step S300 in Fig. 19 (S602). Note that the reading request and the random number R received by the reader/writer 200B do not have to be transmitted from the server 300A.

The information processing apparatus 100A that has received the reading request and the random number R transmitted from the reader/writer 200B in step S602 generates the anonymized ID and generates the electronic signature as in Fig. 31 (S604). Then, the information processing apparatus 100A transmits a random number C (example of value corresponding to reading request) and the electronic signature together with the anonymized ID (S606).

The reader/writer 200B that has received the data transmitted from the information processing apparatus 100A in step S606 transmits the received data to the server 300A (S608).

The server 300A that has received the data transmitted from the reader/writer 200B in step S608 verifies the electronic signature, decrypts the anonymized ID, and converts the decrypted ID_{A} (S610).

The server 300A transmits the ID_{B} obtained by converting the ID_{A} in step S610 to the server 300B (S612). Note that the transmission destination of the ID_{B} is not limited to the server 300B and may be other device such as the reader/writer 200B.

For example, by the processing illustrated in Fig. 31, the use case described with reference to Fig. 30 is realized. Note that it goes without saying that the processing for realizing the use case described with reference to Fig. 30 is not limited to the example illustrated in Fig. 31.

### [2-6-3] Operation And Effect of Information Processing System 1000 According to Sixth Embodiment

In a sixth information processing system 1000, for example, the following operations are realized. Furthermore, by using the sixth information processing system 1000, for example, the following effects are obtained. Note that it goes without saying that the operations of the information processing system 1000 according to the sixth embodiment and the effects obtained by using the information processing system according to the sixth embodiment are not limited to the examples below.
· When the ID is read from the information processing apparatus 100, the information processing apparatus 100 transmits the ID, the random number generated by the information processing apparatus 100, and the anonymized ID (for example, value generated by reversible operation from secret key value), instead of the ID itself, to the reader/writer 200.
· The reader/writer 200 transmits the anonymized ID to the server 300.
· The server 300 obtains an original ID from the anonymized ID by performing a reverse operation. Furthermore, the server 300 converts the obtained ID into another ID that is used by another device.
· The ID stored in the information processing apparatus 100 is not disclosed to devices other than the server 300.

### [2-7] Information Processing Method According to Other Embodiment

Processing according to an information processing method according to the present embodiment is not limited to the processing according to the information processing method according to the first embodiment to the processing according to the information processing method according to the sixth embodiment.

For example, the processing according to the information processing method according to the present embodiment may be processing combining two or more of the processing according to the information processing method according to the first embodiment to the processing according to the information processing method according to the sixth embodiment.

### (Program According to Present Embodiment)

### [I] Program for Functioning as Information Processing Apparatus (First Information Processing Apparatus) According to Present Embodiment

By executing a program that makes a computer system function as the information processing apparatus according to the present embodiment (for example, program that can realize function of processing unit 110 illustrated in Fig. 2) by a processor or the like in the computer system, "an information processing system that can reduce a processing time for reading while ensuring security regarding data reading" is realized. Here, as the computer system according to the present embodiment, a single computer or a plurality of computers is exemplified. A series of processing is executed by the computer system according to the present embodiment.

Furthermore, by executing the program that makes the computer system function as the information processing apparatus according to the present embodiment by the processor or the like in the computer system, the effects obtained by the processing according to the information processing method according to each embodiment can be obtained.

### [II] Program for Functioning as Server (Second Information Processing Apparatus) According to Present Embodiment

By executing a program that makes a computer system function as the server according to the present embodiment (for example, program that can realize function of processing unit 310 illustrated in Fig. 7) by a processor or the like in the computer system, "an information processing system that can reduce a processing time for reading while ensuring security regarding data reading" is realized.

Furthermore, by executing the program that makes the computer system function as the server according to the present embodiment by the processor or the like in the computer system, the effects obtained by the processing according to the information processing method according to each embodiment can be obtained.

The preferred embodiments of the present disclosure have been described in detail above with reference to the drawings. However, the technical scope of the present disclosure is not limited to the examples. It is obvious that a person who has normal knowledge in the technical field of the present disclosure can arrive at various variations and modifications in the scope of the technical ideas described in claims. It is understood that the variations and modifications naturally belong to the technical scope of the present disclosure.

For example, in the above, it is described that the program that makes the computer system function as the information processing apparatus according to the present embodiment (computer program) and the program that makes the computer system function as the server according to the present embodiment (computer program) are separately provided. However, the present embodiment can provide recording mediums that respectively store the programs or a recording medium that stores both the programs.

The configuration described above indicates an example of the present embodiment and naturally belongs to the technical scope of the present disclosure.

### REFERENCE SIGNS LIST

10, 100, 100A Information processing apparatus
20, 200, 200A, 200B Reader/writer
30, 300, 300A, 300B Server
102, 202 First communication unit
104, 204 Second communication unit
106, 206, 304 Control unit
110, 210, 310 Processing unit
1000 Information processing system

## Claims

1. An information processing apparatus (100) comprising:
a processing unit (110) configured to, in response to receiving a reading request including a data reading command and information indicating a region of a recording medium from which data is read, encrypt data corresponding to the region indicated by the reading request by using an encryption key corresponding to the region indicated by the reading request and transmit the encrypted data.

2. The information processing apparatus according to claim 1, wherein the processing unit specifies the encryption key corresponding to a region indicated by the reading request on a basis of setting information associated with the region of a recording medium and encrypts the data corresponding to the region indicated by the reading request by using the specified encryption key.

3. The information processing apparatus according to claim 2, wherein in a case where the encryption key corresponding to the region indicated by the reading request is not specified, the processing unit transmits the data corresponding to the region indicated by the reading request without encrypting the data.

4. The information processing apparatus according to claim 2, wherein
the processing unit
determines whether or not to encrypt the data corresponding to the region indicated by the reading request on a basis of the setting information, and
selectively encrypts the data corresponding to the region indicated by the reading request according to a determination result.

5. The information processing apparatus according to claim 4, wherein
in a case where it is not determined that the data corresponding to the region indicated by the reading request is encrypted,
the processing unit
selectively encrypts the data corresponding to the region indicated by the reading request on a basis of information regarding encryption included in the reading request, and
transmits the data corresponding to the region indicated by the reading request or the encrypted data.

6. The information processing apparatus according to claim 1, wherein in a case where the reading request indicates a plurality of the regions, the processing unit performs encryption for each of the regions indicated by the reading request by using the encryption key corresponding to the region indicated by the reading request.

7. The information processing apparatus according to claim 1, wherein
in a case where information indicating a value is acquired together with the reading request,
the processing unit
generates an electronic signature from at least the data corresponding to the region indicated by the reading request, a value indicated by the information indicating the value, and the encryption key corresponding to the region indicated by the reading request and
further transmits the generated electronic signature.

8. The information processing apparatus according to claim 7, wherein
in a case where the reading request indicates a plurality of the regions,
the processing unit
generates the electronic signature for each of the regions indicated by the reading request or
generates the electronic signature from the data corresponding to the plurality of regions indicated by the reading request, the value indicated by the information indicating the value, and an encryption key for signature generated on a basis of the encryption key corresponding to the plurality of regions indicated by the reading request.

9. The information processing apparatus according to claim 1, wherein
the processing unit
generates an electronic signature from at least the data corresponding to the region indicated by the reading request, information included in the reading request, and the encryption key corresponding to the region indicated by the reading request and
further transmits the generated electronic signature.

10. An information processing method executed by an information processing apparatus (100), the method comprising:
a step for encrypting data corresponding to a region indicated by a reading request by using an encryption key corresponding to the region indicated by the reading request in response to receiving the reading request including a data reading command and information indicating the region of a recording medium from which data is read; and
a step for transmitting the encrypted data.

11. A program for causing a computer to execute:
a step for encrypting data corresponding to a region indicated by a reading request by using an encryption key corresponding to the region indicated by the reading request in response to receiving the reading request including a data reading command and information indicating the region of a recording medium from which data is read; and
a step for transmitting the encrypted data.

12. An information processing system comprising:
a first information processing apparatus (100); and
a second information processing apparatus (300), wherein
the second information processing apparatus is configured to transmit a reading request to the first information processing apparatus,
the first information processing apparatus is configured:
to receive the reading request from the second information processing apparatus,
to encrypt data corresponding to a region indicated by the reading request by using an encryption key corresponding to the region indicated by the reading request in response to receiving the reading request including a data reading command and information indicating the region of a recording medium from which data is read, and
to transmit the encrypted data to the second information processing apparatus, and
the second information processing apparatus is configured:
to receive the encrypted data from the first information processing apparatus,
to decrypt the encrypted data by using a predetermined encryption key,
to convert first identification information into different second identification information in a case where the decrypted data is the first identification information by referring to a conversion table accessible to the information processing apparatus and defining an association between the first identification information and the second information, and
to transmit the second identification information to an external device determined by the second information processing apparatus to correspond to the second identification information by referring to the conversion table.

## Patentansprüche

1. Informationsverarbeitungsvorrichtung (100), umfassend:
eine Verarbeitungseinheit (110), die dafür ausgelegt ist, als Reaktion auf den Empfang einer Leseanforderung, die einen Datenlesebefehl und Informationen beinhaltet, die einen Bereich eines Aufzeichnungsmediums angeben, von dem Daten gelesen werden, Daten, die dem durch die Leseanforderung angegebenen Bereich entsprechen, unter Verwendung eines Verschlüsselungsschlüssels, der dem durch die Leseanforderung angegebenen Bereich entspricht, zu verschlüsseln und die verschlüsselten Daten zu übertragen.

2. Informationsverarbeitungsvorrichtung nach Anspruch 1, wobei die Verarbeitungseinheit den Verschlüsselungsschlüssel, der einem durch die Leseanforderung angegebenen Bereich entspricht, auf der Grundlage von Einstellungsinformationen spezifiziert, die dem Bereich eines Aufzeichnungsmediums zugeordnet sind, und die Daten, die dem durch die Leseanforderung angegebenen Bereich entsprechen, unter Verwendung des spezifizierten Verschlüsselungsschlüssels verschlüsselt.

3. Informationsverarbeitungsvorrichtung nach Anspruch 2, wobei in einem Fall, in dem der Verschlüsselungsschlüssel, der dem durch die Leseanforderung angegebenen Bereich entspricht, nicht spezifiziert ist, die Verarbeitungseinheit die Daten, die dem durch die Leseanforderung angegebenen Bereich entsprechen, überträgt, ohne die Daten zu verschlüsseln.

4. Informationsverarbeitungsvorrichtung nach Anspruch 2, wobei
die Verarbeitungseinheit
auf der Grundlage der Einstellungsinformationen bestimmt, ob die Daten, die dem durch die Leseanforderung angegebenen Bereich entsprechen, verschlüsselt werden sollen oder nicht, und
gemäß einem Bestimmungsergebnis selektiv die Daten verschlüsselt, die dem durch die Leseanforderung angegebenen Bereich entsprechen.

5. Informationsverarbeitungsvorrichtung nach Anspruch 4, wobei
in einem Fall, in dem nicht bestimmt wird, dass die Daten, die dem von der Leseanforderung angegebenen Bereich entsprechen, verschlüsselt sind,
die Verarbeitungseinheit
auf der Grundlage der in der Leseanforderung beinhalteten Informationen über die Verschlüsselung die Daten, die dem durch die Leseanforderung angegebenen Bereich entsprechen, selektiv verschlüsselt, und
die Daten, die dem von der Leseanforderung angegebenen Bereich entsprechen, oder die verschlüsselten Daten überträgt.

6. Informationsverarbeitungsvorrichtung nach Anspruch 1, wobei in einem Fall, in dem die Leseanforderung eine Vielzahl von Bereichen angibt, die Verarbeitungseinheit eine Verschlüsselung für jeden der durch die Leseanforderung angegebenen Bereiche unter Verwendung des Verschlüsselungsschlüssels durchführt, der dem durch die Leseanforderung angegebenen Bereich entspricht.

7. Informationsverarbeitungsvorrichtung nach Anspruch 1, wobei
in einem Fall, in dem zusammen mit der Leseanforderung Informationen, die einen Wert angeben, erfasst werden, die Verarbeitungseinheit
eine elektronische Signatur aus mindestens den Daten, die dem durch die Leseanforderung angegebenen Bereich entsprechen, einem Wert, der durch die den Wert angebenden Informationen angegeben wird, und dem Verschlüsselungsschlüssel, der dem durch die Leseanforderung angegebenen Bereich entspricht, erzeugt und
ferner die erzeugte elektronische Signatur überträgt.

8. Informationsverarbeitungsvorrichtung nach Anspruch 7, wobei
in einem Fall, in dem die Leseanforderung eine Vielzahl von Bereichen angibt,
die Verarbeitungseinheit
die elektronische Signatur für jeden der in der Leseanforderung angegebenen Bereiche erzeugt oder
die elektronische Signatur aus den Daten, die der Vielzahl von Bereichen entsprechen, die durch die Leseanforderung angegeben werden, dem Wert, der durch die Informationen angegeben wird, die den Wert angeben, und einem Verschlüsselungsschlüssel für die Signatur, die auf der Grundlage des Verschlüsselungsschlüssels erzeugt wird, der der Vielzahl von Bereichen entspricht, die durch die Leseanforderung angegeben werden, erzeugt.

9. Informationsverarbeitungsvorrichtung nach Anspruch 1, wobei
die Verarbeitungseinheit
eine elektronische Signatur aus mindestens den Daten, die dem durch die Leseanforderung angegebenen Bereich entsprechen, den in der Leseanforderung beinhalteten Informationen und dem Verschlüsselungsschlüssel, der dem durch die Leseanforderung angegebenen Bereich entspricht, erzeugt und
ferner die erzeugte elektronische Signatur überträgt.

10. Informationsverarbeitungsverfahren, das von einer Informationsverarbeitungsvorrichtung (100) ausgeführt wird, wobei das Verfahren folgende Schritte umfasst:
einen Schritt zum Verschlüsseln von Daten, die einem durch eine Leseanforderung angegebenen Bereich entsprechen, unter Verwendung eines Verschlüsselungsschlüssels, der dem durch die Leseanforderung angegebenen Bereich entspricht, als Reaktion auf den Empfang der Leseanforderung, die einen Datenlesebefehl und Informationen beinhaltet, die den Bereich eines Aufzeichnungsmediums angeben, von dem Daten gelesen werden; und
einen Schritt zum Übertragen der verschlüsselten Daten.

11. Programm zum Veranlassen eines Computers zum Ausführen der folgenden Schritte:
einen Schritt zum Verschlüsseln von Daten, die einem durch eine Leseanforderung angegebenen Bereich entsprechen, unter Verwendung eines Verschlüsselungsschlüssels, der dem durch die Leseanforderung angegebenen Bereich entspricht, als Reaktion auf den Empfang der Leseanforderung, die einen Datenlesebefehl und Informationen beinhaltet, die den Bereich eines Aufzeichnungsmediums angeben, von dem Daten gelesen werden; und
einen Schritt zum Übertragen der verschlüsselten Daten.

12. Informationsverarbeitungssystem, umfassend:
eine erste Informationsverarbeitungsvorrichtung (100); und
eine zweite Informationsverarbeitungsvorrichtung (300), wobei
die zweite Informationsverarbeitungsvorrichtung dafür ausgelegt ist, eine Leseanforderung an die erste Informationsverarbeitungsvorrichtung zu übertragen,
die erste Informationsverarbeitungsvorrichtung für folgende Vorgänge ausgelegt ist:
Empfangen der Leseanforderung von der zweiten Informationsverarbeitungsvorrichtung,
Verschlüsseln von Daten, die einem durch die Leseanforderung angegebenen Bereich entsprechen, unter Verwendung eines Verschlüsselungsschlüssels, der dem durch die Leseanforderung angegebenen Bereich entspricht, als Reaktion auf den Empfang der Leseanforderung, die einen Datenlesebefehl und Informationen beinhaltet, die den Bereich eines Aufzeichnungsmediums angeben, von dem Daten gelesen werden, und
Übertragen der verschlüsselten Daten an die zweite Informationsverarbeitungsvorrichtung, und
die zweite Informationsverarbeitungsvorrichtung für folgende Vorgänge ausgelegt ist:
Empfangen der verschlüsselten Daten von der ersten Informationsverarbeitungsvorrichtung,
Entschlüsseln der verschlüsselten Daten unter Verwendung eines vorbestimmten Verschlüsselungsschlüssels,
Umwandeln von ersten Identifikationsinformationen in verschiedene zweite Identifikationsinformationen, wenn die entschlüsselten Daten die ersten Identifikationsinformationen sind, indem auf eine Umwandlungstabelle Bezug genommen wird, die der Informationsverarbeitungsvorrichtung zugänglich ist und eine Zuordnung zwischen den ersten Identifikationsinformationen und den zweiten Informationen definiert, und
Übertragen der zweiten Identifikationsinformationen an eine externe Vorrichtung, die von der zweiten Informationsverarbeitungsvorrichtung bestimmt wird, entsprechend den zweiten Identifikationsinformationen unter Bezugnahme auf die Umwandlungstabelle.

## Revendications

1. Appareil de traitement d'information (100) comprenant :
une unité de traitement (110) configurée pour, en réponse à la réception d'une requête de lecture incluant une commande de lecture de données et une information indiquant une région d'un support d'enregistrement à partir de laquelle les données sont lues, crypter les données correspondant à la région indiquée par la requête de lecture en utilisant une clé de cryptage correspondant à la région indiquée par la requête de lecture et pour transmettre les données cryptées.

2. Appareil de traitement d'information selon la revendication 1, dans lequel l'unité de traitement spécifie la clé de cryptage correspondant à une région indiquée par la requête de lecture sur la base d'une information de définition associée à la région d'un support d'enregistrement et crypte les données correspondant à la région indiquée par la requête de lecture en utilisant la clé de cryptage spécifiée.

3. Appareil de traitement d'information selon la revendication 2, dans lequel, dans le cas où la clé de cryptage correspondant à la région indiquée par la requête de lecture n'est pas spécifiée, l'unité de traitement transmet les données correspondant à la région indiquée par la requête de lecture sans crypter les données.

4. Appareil de traitement d'information selon la revendication 2, dans lequel
l'unité de traitement
détermine si oui ou non il convient de crypter les données correspondant à la région indiquée par la requête de lecture sur la base de l'information de définition, et
crypte sélectivement les données correspondant à la région indiquée par la requête de lecture conformément à un résultat de détermination.

5. Appareil de traitement d'information selon la revendication 4, dans lequel
dans le cas où il n'est pas déterminé que les données correspondant à la région indiquée par la requête de lecture sont cryptées,
l'unité de traitement
crypte sélectivement les données correspondant à la région indiquée par la requête de lecture sur la base d'une information concernant le cryptage incluse dans la requête de lecture, et
transmet les données correspondant à la région indiquée par la requête de lecture ou les données cryptées.

6. Appareil de traitement d'information selon la revendication 1, dans lequel, dans le cas où la requête de lecture indique une pluralité des régions, l'unité de traitement réalise un cryptage pour chacune des régions indiquées par la requête de lecture en utilisant la clé de cryptage correspondant à la région indiquée par la requête de lecture.

7. Appareil de traitement d'information selon la revendication 1, dans lequel
dans le cas où une information indiquant une valeur est acquise en association avec la requête de lecture,
l'unité de traitement
génère une signature électronique à partir au moins des données correspondant à la région indiquée par la requête de lecture, d'une valeur indiquée par l'information indiquant la valeur, et de la clé de cryptage correspondant à la région indiquée par la requête de lecture et
transmet en outre la signature électronique générée.

8. Appareil de traitement d'information selon la revendication 7, dans lequel
dans le cas où la requête de lecture indique une pluralité des régions,
l'unité de traitement
génère la signature électronique pour chacune des régions indiquées par la requête de lecture ou
génère la signature électronique à partir des données correspondant à la pluralité de régions indiquées par la requête de lecture, de la valeur indiquée par l'information indiquant la valeur, et d'une clé de cryptage pour signature générée sur la base de la clé de cryptage correspondant à la pluralité de régions indiquées par la requête de lecture.

9. Appareil de traitement d'information selon la revendication 1, dans lequel
l'unité de traitement
génère une signature électronique à partir au moins des données correspondant à la région indiquée par la requête de lecture, d'une information incluse dans la requête de lecture, et de la clé de cryptage correspondant à la région indiquée par la requête de lecture et
transmet en outre la signature électronique générée.

10. Procédé de traitement d'information exécuté par un appareil de traitement d'information (100), le procédé comprenant :
une étape pour crypter les données correspondant à une région indiquée par une requête de lecture en utilisant une clé de cryptage correspondant à la région indiquée par la requête de lecture en réponse à la réception de la requête de lecture incluant une commande de lecture de données et une information indiquant la région d'un support d'enregistrement à partir de laquelle les données sont lues ; et
une étape pour transmettre les données cryptées.

11. Programme pour forcer un ordinateur à exécuter :
une étape pour crypter les données correspondant à une région indiquée par une requête de lecture en utilisant une clé de cryptage correspondant à la région indiquée par la requête de lecture en réponse à la réception de la requête de lecture incluant une commande de lecture de données et une information indiquant la région d'un support d'enregistrement à partir de laquelle les données sont lues ; et
une étape pour transmettre les données cryptées.

12. Système de traitement d'information comprenant :
un premier appareil de traitement d'information (100) ; et
un second appareil de traitement d'information (300),
dans lequel
le second appareil de traitement d'information est configuré pour transmettre une requête de lecture au premier appareil de traitement d'information,
le premier appareil de traitement d'information est configuré pour :
recevoir la requête de lecture en provenance du second appareil de traitement d'information,
crypter les données correspondant à une région indiquée par la requête de lecture en utilisant une clé de cryptage correspondant à la région indiquée par la requête de lecture en réponse à la réception de la requête de lecture incluant une commande de lecture de données et une information indiquant la région d'un support d'enregistrement à partir de laquelle les données sont lues, et
transmettre les données cryptées au second appareil de traitement d'information, et
le second appareil de traitement d'information est configuré pour :
recevoir les données cryptées en provenance du premier appareil de traitement d'information,
décrypter les données cryptées en utilisant une clé de cryptage prédéterminée,
convertir une première information d'identification selon une seconde information d'identification différente dans le cas où les données décryptées sont la première information d'identification par référence à une table de conversion accessible par l'appareil de traitement d'information et définissant une association entre la première information d'identification et la seconde information d'identification, et
transmettre la seconde information d'identification à un dispositif externe déterminé par le second appareil de traitement d'information comme correspondant à la seconde information d'identification par référence à la table de conversion.
